# EUROPEAN PATENT SPECIFICATION

(11) **EP 3 760 022 B1**
(45) Date of publication and mention of the grant of the patent: **03.11.2021**
(21) Application number: 20183785.3
(22) Date of filing: 02.07.2020
(51) Int. Cl.: A01D 34/00, G05D 1/02

(54) **INSTALLATION METHOD OF A MOBILE DEVICE FOR LAND MAINTENANCE BASED ON THE RECOGNITION OF THE HUMAN FIGURE**
VERFAHREN ZUR INSTALLATION EINER MOBILEN VORRICHTUNG ZUR LANDPFLEGE BASIEREND AUF DER ERKENNUNG DES MENSCHEN
PROCÉDÉ D'INSTALLATION D'UN DISPOSITIF MOBILE POUR MAINTENANCE TERRESTRE SUR LA BASE DE LA RECONNAISSANCE DE LA FIGURE HUMAIN

(30) Priority: 02.07.2019 IT 201900010668
(43) Date of publication of application: 06.01.2021
(60) Divisional application: 21165611.1
(73) Proprietor: Stiga S.p.A. in breve anche St. S.p.A., 31033 Castelfranco Veneto (TV) (IT)
(72) Inventor: SCAPIN, Michele, I-36061 Bassano del Grappa (VI) (IT); CECCHETTO, Mauro, I-35018 San Martino di Lupari (PD) (IT); VALLONE, Varna, I-31033 Castelfranco Veneto (TV) (IT); ROBINSON, Sean, 31033 Castelfranco Veneto (TV) (IT)
(74) Representative: PGA S.p.A.

(56) References cited:
- CN-A- 109 258 060
- US-A1- 2014 371 909
- US-A1- 2019 163 174

## Description

### FIELD OF THE INVENTION

The present invention relates to an installation method of a mobile device apt to operate in a working area, such as fields, lawns, gardens or agricultural lands. This installation method provides mapping such working area. The mobile device can be a device for the maintenance of land, for example a robot lawnmower.

### PRIOR ART

It is known that self-driving mobile devices (robots) can be used in a working area, such as a garden, to perform specific operations, in particular mowing. These devices are subject to rather strict safety regulations, given that potentially dangerous payloads are used to carry out their operations, for example a rotating blade.

Above all, this legislation places very severe constraints on the capability of the devices to remain in their working area. Once the contours of this working area have been defined, such contours cannot be exceeded by self-driving mobile devices except for truly minimal trespassing (indicatively less than 100 cm) admissible on the basis of the strict tolerances required by law. Considering that the contours can separate the working area for example from a road or a swimming pool, the stringent tolerances are easily understandable, given that if mobile devices were to deviate significantly from the working area, they would harm the safety of people passing by on the road or swimming in the pool.

Therefore, the legislation has made it inevitable, when installing an autonomous mobile device, to lay perimeter wire to physically define the contour of the working area. However, this laying is a particularly unwanted operation since the perimeter wire must be buried or fixed by means of pegs. As the size of the working area increases and/or as the complexity of the geometry of the working area increases, laying perimeter wire becomes an increasingly complex, long and tiring operation. Moreover, with the wearing out or damaging of the perimeter wire over time, there is the further drawback of repeating the operation of laying the perimeter wire several times during the lifetime of autonomous mobile device.

Patent application US2019/0163174A1 describes an installation method of a mobile device that provides to chase a terminal carried by an operator. The chasing of the terminal is described as a signal tracking, a two-way data communication being established between the mobile device and the terminal, such that the mobile device can in particular receive the position information acquired by the terminal, for example through GPS sensor. The installation method described in US2019/0163174A1, although apparently of potential interest as it tends to constitute an alternative to the installation of perimeter wire, is however affected by critical issues, which in practice can be detrimental to its correct application. Suffice it to mention that the signal tracking can allow a solid detection of the distance, but certainly not a solid detection of the orientation. Therefore, during the installation procedure, the changes of direction made by the operator (who carries the terminal with him) cannot be adequately perceived, so that the contour defined at the end of the installation method can very hardly reproduce the path followed by the operator. Furthermore, this installation method is adversely affected by poor flexibility and poor reliability, given the central role attributed to the terminal in this installation method and given the accuracy in detecting its position. Incidentally, it should be noted that US2019/0163174A1 also includes an embodiment of the installation method which involves the installation of a camera on board the mobile device and the application of a marker to the terminal, the mobile device in this case chasing the terminal by means of the camera that captures the image of the marker applied to the terminal carried by the operator. Even this embodiment is patently affected by objective critical issues. First of all, the inconvenience is inherent in the fact that the operator must always carry the marker with him and therefore proceed with the operation of applying it to the terminal. Moreover, further inconvenience is due to the fact that the operator must be careful and always carry the marker at a suitable distance from the mobile device during the following and above all pay attention that this marker is never hidden from the camera of the mobile device. Furthermore, it is clear how the involvement of the marker makes the installation method even less flexible and reliable. In fact, the use of the marker not only does not relieve the terminal from its central role, but also introduces an additional element with an equally central role, complicating the installation method. Furthermore, it is evident that, since the terminal is a portable device with reduced dimensions (typically a smartphone or at most a tablet), the marker must also have reduced dimensions (even more limited than the dimensions of the terminal). It follows that the mobile device finds considerable difficulty in detecting with sufficient precision the position of the marker and therefore the position of the terminal.

### OBJECTIVES OF THE INVENTION

The objective of the present invention is to solve at least one of the drawbacks and/or limitations of the previous solutions in the technical field of autonomously guided mobile devices such as, for example, robot lawnmowers.

A first objective of the present invention is to provide an installation method of a mobile device and/or an operating method of a mobile device which make it possible to comply with the stringent regulatory provisions in force, without requiring the laying of perimeter wire.

A second objective of the present invention is to provide an installation method of a mobile device and/or an operating method of a mobile device which allow to prevent any deviations of the mobile device from the working area by exceeding the expected tolerance (also when this tolerance is minor than 100 cm).

A third objective of the present invention is to provide an installation method of a mobile device and/or an operating method of a mobile device which are functional to guarantee maximum safety during the operation of the autonomous mobile device, even when the latter makes use of a potentially dangerous payload such as a rotating blade.

A fourth objective of the present invention is to provide an installation method of a mobile device and/or an operating method of a mobile device which suitably take into account the peculiarities of the contours of the working area of the mobile device.

A fifth objective of the present invention is to provide an installation method of a mobile device and/or an operating method of a mobile device which allow the mobile device to operate in particularly easy, effective and intuitive ways and which allow to make use of network technologies to program the operations of the mobile device and to monitor and/or control it.

A sixth objective of the present invention is to provide an easy and quick installation method for defining the working area of the mobile device, in particular for defining at least one contour delimiting at least partially the working area and/or for defining at least one reference path in the working area.

A seventh objective of the present invention is to provide an installation method of a mobile device which is not subject to deterioration and damaging phenomena to which the devices currently used to delimit the working area of a mobile device are actually exposed (i.e. the perimeter wires, which, if buried, are subject to corrosive phenomena and, if raised from the ground, are subject to atmospheric agents).

These and other objectives, which will appear more clearly from the following description, are substantially achieved by an installation method according to one or more of the appended claims.

### BRIEF DESCRIPTION OF THE DRAWINGS

Some embodiments and some aspects of the invention will be described below with reference to the accompanying drawings, provided for indicative and therefore non-limiting purposes only wherein:
- Figure 1 is a schematic view of an embodiment of the installation method of the mobile device wherein the trajectory covered by an operator assumes relevance;
- Figure 2 is a schematic view of a step of the installation method of Figure 1 wherein the operator is recognized by the mobile device;
- Figure 3 is a schematic view representing an exemplary installation method of the mobile device not falling under the scope of the claims wherein the maneuver of the mobile device by joystick along a predefined trajectory assumes relevance;
- Figure 4 is a schematic view representing an exemplary installation method of the mobile device not falling under the scope of the claims wherein the tracing of the contour of the working area on a virtual map or satellite image assumes relevance;
- Figures 5 and 6 are top views, provided for explanatory but not limitative purposes, of working areas comprising different regions each having a distinct tolerance threshold;
- Figure 7 shows a flowchart of a representative embodiment of the present installation method;
- Figure 8 shows a flowchart representing an embodiment of a control logic for maintaining the distance between the mobile device and the operator and
- Figure 9 shows a flowchart representing an embodiment of the present installation method which is particularly advantageous in that it is based on the recognition of the human figure.

### DEFINITIONS AND CONVENTIONS

It should be noted that in the present detailed description corresponding parts shown in the various figures are indicated with the same numerical references. The figures illustrate the object of the invention through schematic and non-scaled representations.

### Mobile device

The expression "*mobile device*" refers to a device for the maintenance of gardens, lawns, agricultural land or crops. Preferably, the mobile device is a self-driving device. By way of example, the mobile device may be a robot lawnmower. Alternatively, the mobile device can be a small tractor suitable for mowing turfgrass and/or for administering fertilizer.

In possible embodiments of the mobile device (especially if it includes battery powered moving means), a base is associated with the mobile device, designed to perform specific operations, such as for example charging or refueling operations.

### Control unit

The mobile device herein described can comprise at least one control unit responsible for controlling the operating conditions carried out by the mobile device itself and/or for controlling the steps of the installation method according to the present invention.

According to an alternative technical solution, the mobile device herein described may be associated, by means of one or more suitable nodes which interface on a communication network, with a control unit arranged in a remote position with respect to the mobile device (for example cloud-based) and responsible for controlling the operating conditions implemented by the mobile device and/or controlling the steps of the installation method according to the present invention.

In both of the disclosed technical solutions, the control unit can comprise a single unit or can be made up of a plurality of distinct control units, depending on design choices and operating requirements.

The expression "*control unit*" means an electronic component which can include at least one of the following: a digital processor (CPU), an analog circuit, or a combination of one or more digital processors with one or more analog circuits. The control unit can be "*configured*" or "*programmed*" to perform some steps: this can be performed in practice by any means that can allow to configure or program the control unit. For example, if a control unit comprises one or more CPUs and one or more memories, one or more programs can be stored in appropriate memory banks connected to the CPU or CPUs; the program or programs contain instructions which, when executed by the CPU or CPUs, set or configure the control unit to perform the operations described in relation to the control unit. Alternatively, if the control unit is or includes analog circuitry, then the circuit of the control unit can be designed to include circuitry configured, when in use, to process electrical signals in such a way as to carry out the steps relating to the control unit.

### Working area

The mobile device is configured to operate in a working area. The expression "*working* area" refers in particular to an area defined in an outdoor environment, therefore a land such as a garden, a lawn, agricultural land or a cultivated land. The working area can have homogeneous characteristics (for example a plot of land entirely used as a lawn) or heterogeneous characteristics.

The working area is a two-dimensional entity defined by at least one contour separating the working area from the adjacent areas. This contour can coincide at least partly with a physical obstacle (for example a wall or a hedge) that the mobile device cannot cross. Alternatively, this contour can coincide at least partly with a separation line of the working area with an adjacent installation (for example a road or a swimming pool) to which the mobile device shall not have access.

The contour of the working area can coincide at least partly with the external perimeter of the working area or with a stretch of the external perimeter of the working area. Additionally, the contour of the working area can coincide with a perimeter within the working area or with a stretch of a perimeter within the working area, this occurring in particular when physical obstacles (for example a tree or a flower bed) or installations (for example a swimming pool) arranged inside the working area must be excluded from the working area.

### Reference path

The installation method according to the present invention can be used, among other things, to define at least one reference path in the working area. The expression "*reference path*" assumes the meaning of preferred path within the working area that the mobile device is intended to travel in order to move within the working area and/or to reach predetermined destinations.

In the first case, the reference path can include a preferential path crossing at least one possible transition portion of the working area (for example a driveway) separating a first portion of the working area from a second portion of the working area. In the second case, the reference path can include a preferential path to reach for example the charging dock (when the mobile device needs to recharge its batteries), or a tap connected to the water network (when the mobile device needs to be washed) or to a garage (when the mobile device needs to be loaded onto a vehicle).

When the mobile device is operating, intending to make it travel on the reference path, typically a movement of the mobile device to point of the reference path which is faster and/or easier to reach and then a movement of the mobile device along the reference path, until reaching the desired portion of the working area or the desired destination within the working area.

### Global satellite navigation system

The expression "*global satellite navigation system*" refers to a system of geo-radiolocation and terrestrial, maritime or air navigation, which uses a network of artificial satellites in orbit and pseudolites. The acronym "GNSS" is also often used for this system (from the English "Global Navigation Satellite System").

A global satellite navigation system aims at providing a geolocation service, or a geo-spatial positioning service with global coverage allowing specific electronic receivers to determine their geographic coordinates (longitude, latitude and altitude) on any point of the surface of the earth or atmosphere with an error of a few meters, by processing radio frequency signals transmitted in line of sight by satellites.

In the present description and in the appended claims, reference will be made mainly, by way of example and not as a limitation, to the Global Positioning System (GPS) technology, of US derivation and currently fully operational. However, it should be pointed out that different technologies can be equivalently used for the purposes of the present invention, for example GLONASS technology (Russia), Galileo technology (Europe) and Beidou technology (China).

### DETAILED DESCRIPTION

### Mobile device

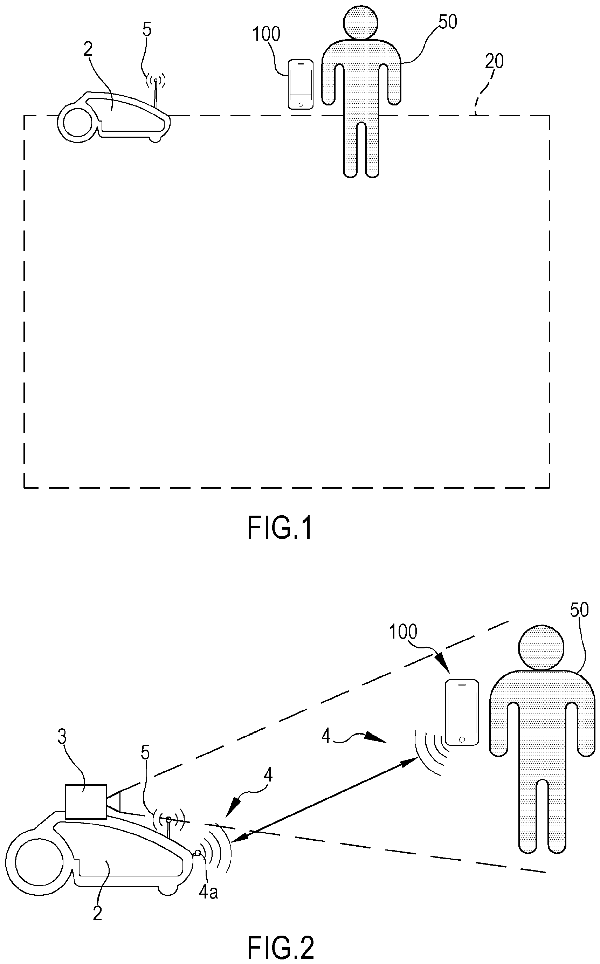

The expression mobile device 2 refers to a device used for the maintenance of a working area 1 such as a garden, a lawn, an agricultural land or a crop, as shown schematically in Figures 1, 5 and 6 attached to the present description by way of example. In a preferred embodiment of the present invention, the mobile device 2 is a robot lawnmower, whose payload is advantageously represented by a rotating blade.

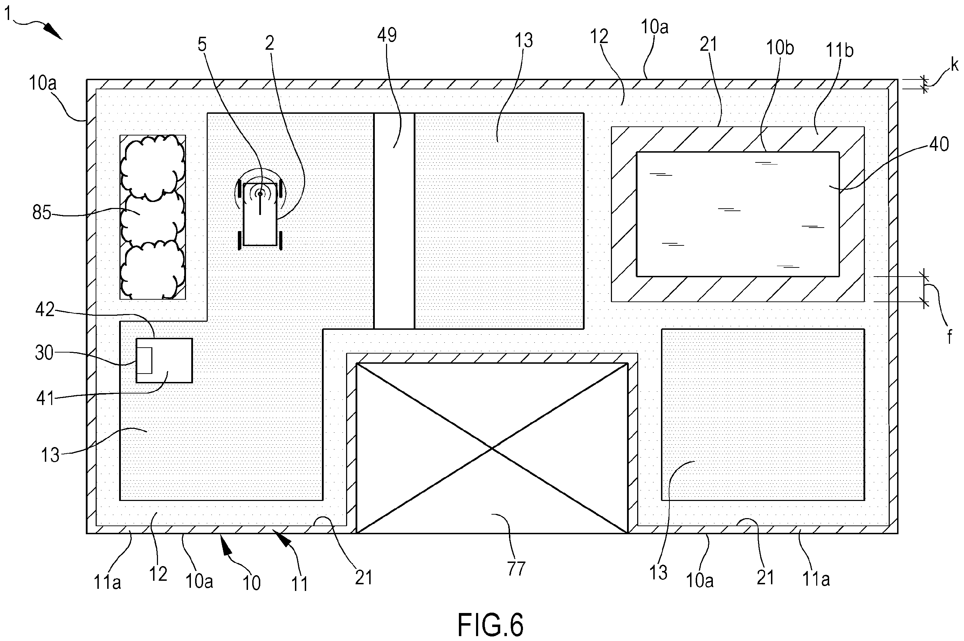

The mobile device 2 comprises a supporting frame carrying moving means configured to determine the movement of the device itself at least within the working area 1. The moving means comprise at least one motor, of the electric or internal combustion type, connected to at least one drive wheel: in particular, the mobile device 2 comprises three or more wheels of which at least one drive wheel, the wheels being carried by the frame of the mobile device 2. If the mobile device is moved by means of an electric motor, the frame is configured to house at least one battery connected to the electric motor. This battery is in particular of the rechargeable type, whereby the mobile device comprises at least one connector aimed at allowing connection to a charging base 30, the latter shown schematically in Figure 6.

The mobile device 2 also comprises a position detector 5 carried by the frame and configured to determine the position of the mobile device 2 itself: this position can be obtained in absolute terms, for example by means of geographic coordinates provided by a satellite navigation system (in particular GPS type), or in relative terms with respect to a predetermined reference point (for example using beacon technology). In one embodiment, this reference point can coincide with the charging base 30. In other words, the position detector 5 is configured, when the mobile device is in an operating condition, to provide a detection representative of the position of the mobile device 2, at least if the latter is within the working area 1. This detected position can, depending on the operating conditions and the place where the mobile device 2 is arranged, deviate from the actual position of the mobile device 2, defining a position detection error. This error can take random values as a function of a plurality of variables, such as for example the quality of the signal received by the position detector.

In the preferred embodiment, the position detector of the mobile device 2 comprises at least one satellite antenna 5 (for example according to GPS technology) configured to provide the position of the device 2 in terms of absolute coordinates. Alternatively, the position detector 5 of the mobile device 2 comprises a system for measuring the distance with respect to at least one reference point positioned in a predetermined position inside or outside the working area 1. Knowing the position of this reference point and the distance of the mobile device 2 with respect to this point, it is possible to estimate or obtain the position of the mobile device 2 within the working area 1. This distance measuring system can comprise a signal emitter and a signal receiver (for example a transceiver) positioned on the mobile device 2 and/or in correspondence of the reference point, such as for example a beacon or a time-of-flight meter.

The mobile device 2 can further comprise, or is operationally associated with, means for estimating the uncertainty in detecting its position. By way of example, and not as a limitation, such means allowing the estimation of the uncertainty in the position of the mobile device 2 can include:
- a single antenna 5, the uncertainty in the position of the mobile device 2 being estimated by means of an algorithm based on the quality of the signal detected by this antenna, in particular in the case of a GPS antenna depending the number of connected satellites;
- a pair of antennas (not shown in the attached figures) arranged on the mobile device 2 at a known distance, the uncertainty in the position of the mobile device 2 being estimated by calculating the distance between the positions detected by the two antennas and comparing this calculated distance with the known distance between the antennas and/or
- an odometer and/or an inertial sensor and/or a vision system applied to the mobile device 2, the uncertainty in the position of the mobile device 2 being estimated by determining the distance traveled by the mobile device 2 in a time interval, calculating the distance between the positions detected at the beginning and at the end of this time interval and comparing this calculated distance with the distance traveled by the mobile device 2 and/or
- a receiver associated to the mobile device 2 and capable of receiving from an online service at least one signal providing a piece of information about the uncertainty in the detection of the position in correspondence of the geographic coordinates where the mobile device 2 is located.

The mobile device 2 can further comprise, as a payload, a rotating blade arranged at a bottom portion of the frame and configured to determine the mowing of the grass, the rotation of the rotating blade being caused by its activation (in continuous or selective mode) by means of a dedicated actuation device (for example an electric motor). Alternatively or additionally, the mobile device 2 can comprise, as a payload, one or more tools for cutting, drilling or plowing the soil or one or more tools with a different function, for example tools for irrigating the soil or for administering soil fertilizer.

The mobile device 2 further comprises a time-of-flight detection system 4 configured to detect the presence of an operator or surrounding objects. In particular, the detection system can be configured to detect the distance from an operator 50 or from a mobile device 100 carried by an operator 50. The time-of-flight detection system 4 preferably comprises a transceiver 4a, in particular a transceiver 4a integral with the mobile device 2, as shown schematically in Figure 2. This transceiver 4a comprises in particular a transmitter configured to emit a signal and a receiver configured to receive a corresponding and subsequent signal, which may consist of the same signal emitted by the transmitter, which itself therefore acts as a return signal (having been reflected at least partly by an object or by a subject located near the mobile device 2), or which, alternatively, may consist of a response signal, that is a signal emitted by a further transceiver external to the mobile device 2 upon reception of the signal transmitted by the transceiver 4a integral with the mobile device 2. Depending on the time elapsed between the moment of the signal emission and the moment of return of the reflected signal or the response signal, the detection system is configured to estimate the distance of the object or subject from the transceiver 4a itself, that is from the mobile device 2. In one embodiment, the time-of-flight detection system 4 can comprise a radio connection, for example a Bluetooth technology connection. In a further embodiment, the time-of-flight detection system 4 can comprise an ultrasound emitter.

The mobile device 2 comprises an optical detection system 3 configured to detect the presence of an operator or objects around it. Furthermore, the detection system can be configured to detect the distance from an operator 50 or from a close object.

In particular, the optical detection system comprises at least one camera integral with the mobile device 2.

The mobile device 2 can comprise only the optical detection system 3: in a further embodiment the mobile device 2 can comprise both the time-of-flight detection system 4, and the optical detection system 3.

The optical detection system 3 and the time-of-flight detection system 4 can have an optimal detection interval, i.e. a minimum distance and a maximum distance between which the detections by the optical detection system 3 and/or the detections by the time-of-flight detection system 4 are particularly precise and reliable. It should be specified that this optimal detection interval can depend not only on the characteristics of the optical detection system 3 and/or the time-of-flight detection system 4, but also on at least one characteristic of the mobile device 2 and/or on at least one characteristic of the operator or of close object to be detected. Taking for example the optical detection system 3, the optimum detection interval can be affected, among other things, by the application measure of the optical detection system 3 on the mobile device 2 and by the dimension of the operator or of the close object to be detected, in particular the height of the operator. In a preferential embodiment, the mobile device 2 has a maximum size between 100 mm and 1000 mm, more particularly between 200 mm and 400 mm. However, the possibility of providing mobile devices 2 with alternative dimensions is not excluded.

A control unit is also provided and operationally connected at least to the moving means, such as for example the motor and the position detector 5. The control unit is advantageously configured not only to receive the signal emitted by the position detector 5, but also to estimate an uncertainty in the detection of this position. The control unit is equipped with a suitable computational capacity and is configured to perform, among other things, comparing or contrasting operations. Furthermore, the mobile device 2 can comprise a memory configured to record the working area 1 and a plurality of regions obtained in the working area 1, in terms of geographic coordinates.

The control unit, when configured to estimate the uncertainty of the position of the mobile device 2 detected by the position detector 5, given that it is operationally connected to the means prepared for this purpose, can be further configured to compare this uncertainty with a threshold of tolerance relative to a region of the working area 1 and/or to determine the movement or the arrest of the mobile device 2 as a function of this comparison. The memory is preferably carried directly by the mobile device 2, in particular by the frame of the mobile device 2, to which the control unit is directly connected. Alternatively, the memory can be arranged in a remote position with respect to the mobile device 2, for example associated with a remote device 100, shown schematically in Figures 1 and 2, such as a calculator or a smartphone, and connected wirelessly to the control unit of the mobile device 2. Similarly, in a remote position with respect to the mobile device 2, processing means operatively connected to the control unit of the mobile device 2 may be arranged, such processing means being configured to perform operations that require a relatively high computational complexity, such as example the operation of estimating the uncertainty of the position of the mobile device 2 and/or the operation comparing this estimated uncertainty with one or more tolerance thresholds.

In the preferential embodiment, the mobile device 2 is equipped with an autonomous or semi-autonomous driving system, whose movement can be determined at least partly according to the region of the working area where the mobile device 2 is located.

The optical detection system 3 and/or the time-of-flight detection system 4 are in particular operatively connected to the control unit and possibly to the memory so as to allow the recording of the detections. In particular, information about the presence of an object adjacent to or inside the working area or the distance detected between the mobile device 2 and this object can be recorded in said memory and associated with a position of the mobile device 2 detected by means of position detector 5.

Furthermore, the optical detection system 3 and/or the time-of-flight detection system 4 can fulfill safety functions, in particular by stopping or deviating the mobile device 2 and/or stopping the relative payload, for example the rotating blade, when an unexpected obstacle (for example a cat) interferes with the trajectory traveled by the mobile device 2. Also in order to increase safety, the mobile device 2 can be equipped with sensor devices which cooperate with the position detector in order to assist the movement of the mobile device 2 in the working area 1. Advantageously, these sensor devices can include at least a sensor device capable of discerning whether the ground beneath the mobile device 2 or near the mobile device 2 is covered with grass, in particular said sensor device being a spectrum sensor or a capacitive sensor.

The mobile device 2 can comprise further sensor devices, such as for example sensor devices suitable for determining parameters such as the state of health of the lawn (in particular by calculating the NDVI index) and/or the humidity of the soil and/or the height of the grass, and/or sensor devices suitable for detecting a possible grip or possible lifting of the mobile device 2, and/or sensor devices suitable for detecting the presence of rain or, more generally, predetermined atmospheric conditions.

The mobile device 2 can also be associated, in particular by means of a wireless connection, with a remote device 100 such as for example a smartphone, a calculator or a tablet. This remote device 100 can be associated via radio-frequency connection, for example via Bluetooth, to the transceiver carried by the mobile device 2. This association allows to implement a plurality of functions of the mobile device 2. In particular, once the mobile device 2 is associated with the remote device 100, it is possible to implement the steps provided by an installation method as described below. This association step can provide for a security system, capable of interrupting the operation of the mobile device 2 if this association does not give a positive result: in this regard, this association step may be subject to the request, by the mobile device 2 or of the remote device 100, of an association password to enable activation of the mobile device 2. Furthermore, this association step can be selectively set to allow the installation of the mobile device 2 or to allow its normal operation.

### Installation method

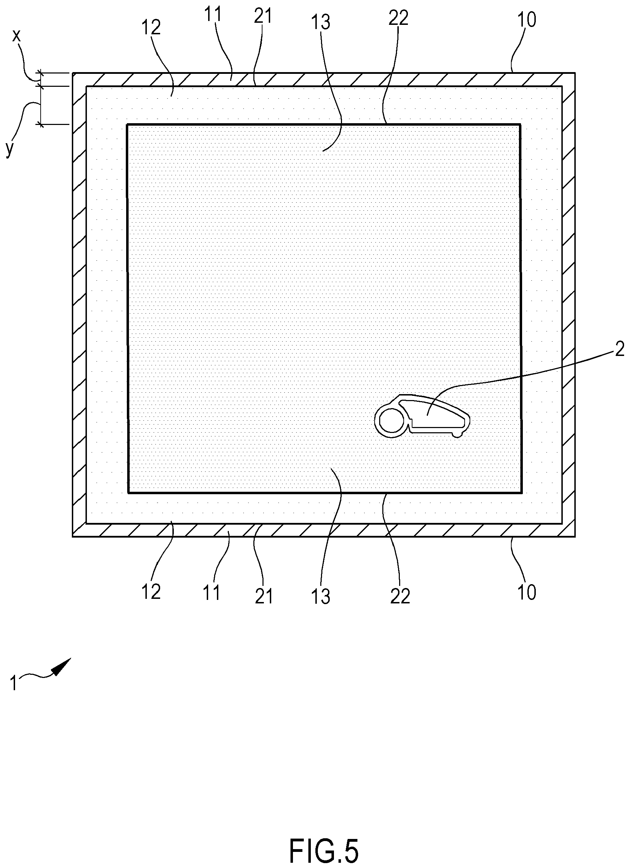

The reference number 1 overall indicates a working area within which a mobile device 2, for example of the previously described type, is configured to operate. The working area 1, shown schematically in the accompanying Figures 1, 5 and 6, which represent possible examples, can be agricultural land, a lawn or a garden and has a contour 10 defining internally an area pertaining to the mobile device 2, Figures 1 and 5 represent a working area 1 with a rather essential geometry (square-shaped), while Figure 6 represents a working area 1 with a sample geometry of a private garden (this geometry taking into account installations being adjacent to the working area 1, herein represented by a building 77, a flower bed 85, a driveway 49 and a swimming pool 40). The mobile device 2 is therefore configured to move and operate, for example mowing grass or implementing further actions on the ground, within this contour 10. The contour 10 therefore defines a limit beyond which, except tolerances allowed by law, transit to the mobile device 2 is forbidden. The accompanying drawings show a contour 10 with a polygonal shape, wherein each stretch is defined by a straight segment defining a closed profile. Alternatively, the contour 10 can have a polygonal or curvilinear shape or a combination thereof.

The installation method described below defines, in terms of steps, a procedure suitable for defining this working area 1. Consequently, the following steps are to be considered preliminary to a normal operating condition of the mobile device 2, wherein normal operating condition means the autonomous driving condition of the mobile device 2 within the working area 1 for the maintenance of the latter.

The installation method provides for a mapping step of the working area 1 comprising a definition step of the contour 10 to delimit at least partially the working area 1. It should be specified that, according to the present invention, this contour 10 can be a contour that externally delimits the working area 1, or a perimeter that internally delimits the working area 1 (i.e. aimed at excluding any installations such as swimming pools, flower beds, and so on). It should further be specified that, according to the present invention, this contour 10 can be defined in terms of absolute geographic coordinates deriving from a satellite sensor, in particular of the GPS (Global Positioning System) type, or in terms of relative geographic coordinates with respect to a predetermined reference point or a predetermined reference line. This reference point can be identified from the position of a charging base, while this reference line can coincide with the stretch of the contour 10 closest to the mobile device 2. The geographic coordinates relating to reference point or to the reference line can be obtained by means of a radio frequency communication system, in particular of the UWB (Ultra Wide Band) or Bluetooth type.

The mapping step can include, in addition to the definition step of the contour 10, also the definition step of one or more reference paths for the mobile device 2. By reference path we mean a path that the mobile device 2 can preferably travel to move within the working area 1 and/or to reach predetermined destinations. In a first example, a reference path can include a path for crossing the driveway 49, shown in Figure 6, when the mobile device 2 needs to move from the left portion of the working area 1 to the right portion or vice versa. In a second example, a reference path can include a path for reaching the charging base at the reference point 30 when the mobile device 2 needs to recharge its batteries. In a third example, a reference path may include a path for reaching a tap connected to the water network when the mobile device 2 needs to be washed. In a fourth example, a reference path may include a path to reach a garage when the mobile device 2 needs to be loaded onto a vehicle.

According to the invention, the definition step of the contour 10 and/or of the reference path comprises a following step, by the mobile device 2, of an operator 50 moving along a predetermined trajectory 20, as shown schematically in Figure 1. In other words, in this following step, the operator 50 moves along the trajectory 20 to define the contour 10 of the working area, while the mobile device 2 follows the operator 50 so as to replicate this trajectory 20 by means of the activation of its moving means. It is preferably assumed that the path followed by the mobile device 2 during this following step defines, in terms of coordinates, the contour 10 of the working area 1; therefore the operator 50 is required to travel the contour 10 during the following step. The geographic coordinates traveled by the operator during his/her walk in the following step then become the geographic coordinates of the contour 10 of the working area 1. Alternatively, it can be assumed that the contour 10 is arranged at a predetermined distance from the path of the operator 50, whereby this predetermined distance will be taken into account in the subsequent determination of the geographic coordinates of the contour 10 of the working area 1.

The following step can advantageously provide that the mobile device 2, when replicating the trajectory 20 traveled by the operator 50, keeps its payload deactivated (especially when the payload is represented by a rotating blade).

In greater detail, the following step comprises a step for detecting the distance between the mobile device 2 and the operator 50 aimed at a subsequent monitoring of this distance and performed by means of the optical detection system 3 and/or by means of the time-of-flight detection system 4 previously described. In a preferential embodiment, this distance is detected by means of the time-of-flight detection system 4 which puts the transceiver 4a in communication with the remote device 100 carried by the operator 50, preferably through a Bluetooth connection (for example Bluetooth 5.0). This connection between the remote device 100 and the mobile device 2 therefore allows both their mutual association to allow the activation of the mobile device 2, and the detection of the distance between the remote device 100 and the mobile device 2. However, this preferential embodiment does not preclude the possibility of providing a step for detecting the distance between the mobile device 2 and the operator 50 only by means of the optical detection system 3, which provides for the optical detection of the operator 50 and therefore determining or estimating his/her distance by means of a suitable image processing. After the distance detection step, a distance monitoring step is therefore provided wherein the mobile device 2 shall maintain a predetermined distance from the operator 50 (the latter being in motion), this predetermined distance being in particular equal to the distance determined or estimated during the detection step.

This following step, optionally prior to the distance monitoring step just described (if provided), can further include a recognition step and/or a characterization step of the operator 50. By way of example, the optical detection system 3 can implement the recognition of the shape (or alternatively the facial recognition) of the operator to be followed. Alternatively or in combination, the recognition step provides for an association between the mobile device 2 and the remote device 100 (for example a smartphone) carried by the operator 50, for example by means of a Bluetooth connection. Advantageously, the installation method can be implemented only if this association between mobile device 2 and operator 50 has been verified. This recognition step can be carried out by entering a password in the mobile device 2 or by fingerprint or iris recognition of the operator 50. In accordance with a preferential embodiment, if the recognition step is not verified, the mobile device 2 is configured to inhibit any subsequent implementation of the installation method.

The recognition step of the operator 50 is functional to determine an exclusive association between the mobile device 2 and the operator, thus preventing any unauthorized subjects from interfering in the subsequent definition of the contour 10 or of the reference path and consequently increasing security, in particular of the following step. Once the operator 50 has been recognized by the optical detection system 3, the mobile device 2 will then follow only the subject presenting the recognized characterization, while any further subjects (distinct from the subject recognized by characterization) will not be followed by the mobile device 2. Similarly, once the mobile device 2 is associated with the remote device 100, the mobile device 2, using the time-of-flight detection system 4, will then follow the operator 50 only if the latter brings along the remote device 100, any further subjects with devices different from the remote device 100 not being followed by the mobile device 2. The following step, implemented by means of the control unit of the mobile device 2, provides that the mobile device 2, during one of its installation conditions, is configured to follow the operator 50 while the latter moves along a trajectory, reproducing as accurately as possible the trajectory traveled by the operator 50. The following step can further comprise a piloting step of the mobile device 2 on the basis of a comparison between a reference distance and the distance, detected in the distance monitoring step, between the mobile device 2 and operator 50. The piloting step can comprise a check of the advancement and/or speed and/or acceleration and/or orientation of the mobile device 2. In particular, this piloting step comprises a step for commanding the relative moving means, in particular the electric traction motor, according to the comparison between the reference distance and the measured distance. In fact, the control unit is configured to control the moving means according to the comparison between the measured distance and the reference distance. In particular, according to this comparison, the control unit can be configured to vary, by means of a specific command given to the moving means, the speed of the mobile device 2.

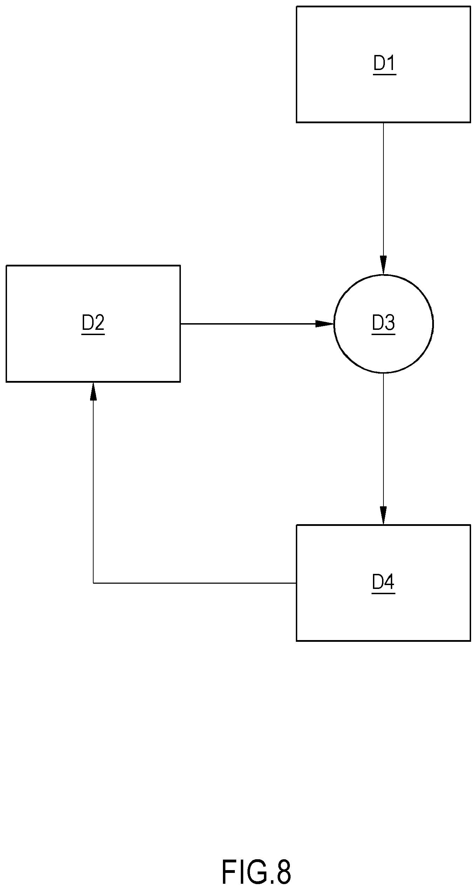

The method according to the present invention can therefore comprise a step of setting the reference distance between the mobile device 2 and the operator 50. The reference distance value can be a predetermined distance value (i.e. set to a constant value which can for example be 1.5 meters), this predetermined value being able to be entered manually by the operator 50 on a special interface of the remote device. Alternatively, the reference distance value can be a distance value calculated on the basis of at least one characteristic of the mobile device 2 and/or of the operator 50, wherein this characteristic can be a dimension, for example the height of the operator 50 (in particular it can be provided that the reference distance assumes greater values as the height of the operator 50 increases, to allow the optical detection system 3 of the mobile device 2 to capture the entire shape of the operator during the subsequent following step). Alternatively, this reference distance can be a distance value detected between the mobile device 2 and the operator 50 preceding the following step: the operator 50 can position himself/herself in front of the mobile device 2 at a preferred distance, the mobile device 2 detecting this distance by means of the optical detection system 3 or the time-of-flight detection system 4 and the control unit thus memorizing this distance detected as the reference distance to be maintained during the following step (advantageously, the detection of the distance between the mobile device 2 and the operator 50 occurring simultaneously with the recognition of the operator, the control unit thus memorizing as a reference distance the distance between the mobile device 2 and the operator 50 during the recognition and/or characterization step of the operator 50). A flowchart shown in Figure 8 represents a control logic relating to the piloting step of the mobile device 2 as a function of the distance detected between the mobile device 2 and the operator 50, this control logic providing in particular a feedback control of the moving means of the mobile device 2 by means of the control unit. In particular, the following blocks are identified in the logic shown in Figure 8:
- block D1 represents the setting of the reference distance (setpoint) between the mobile device 2 and the operator 50 according to any of the methods described above (for example, detection of the distance between the mobile device 2 and the operator 50 during the recognition step of the operator);
- block D2 represents the monitoring, by means of the optical detection system 3 or the time-of-flight detection system 4, of the distance between the mobile device 2 and the operator 50 or between the mobile device 2 and the remote device 100 carried by the operator 50;
- block D3 represents the comparison step between the monitored distance and the reference distance (this comparison step can further provide evaluating the variation of the monitored distance in a predetermined time interval and comparing it with a reference value of the variation of the distance in a predetermined time interval: in other words, this comparison step can be carried out both by evaluating the difference between the monitored distance and the reference distance, and by evaluating the difference between the derivative with respect to the time of the monitored distance and a value of a derivative of reference);
- block D4 represents the piloting step of the mobile device 2, by means of the control unit (the piloting step intervening in particular on the moving means) and according to the outcome of the comparison referred to in block D3 (for which the mobile device 2 is possibly varied in advancement speed and/or in advancement direction), in particular during the advancement step, being the speed and trajectory of the mobile device 2 constantly determined by the control unit.

The definition procedure of the contour 10 described above (which makes use of tracking means installed on board the mobile device 2) is particularly appreciable in that it achieves an optimal combination of simplicity of the process and precision in defining the contour of the working area 1.

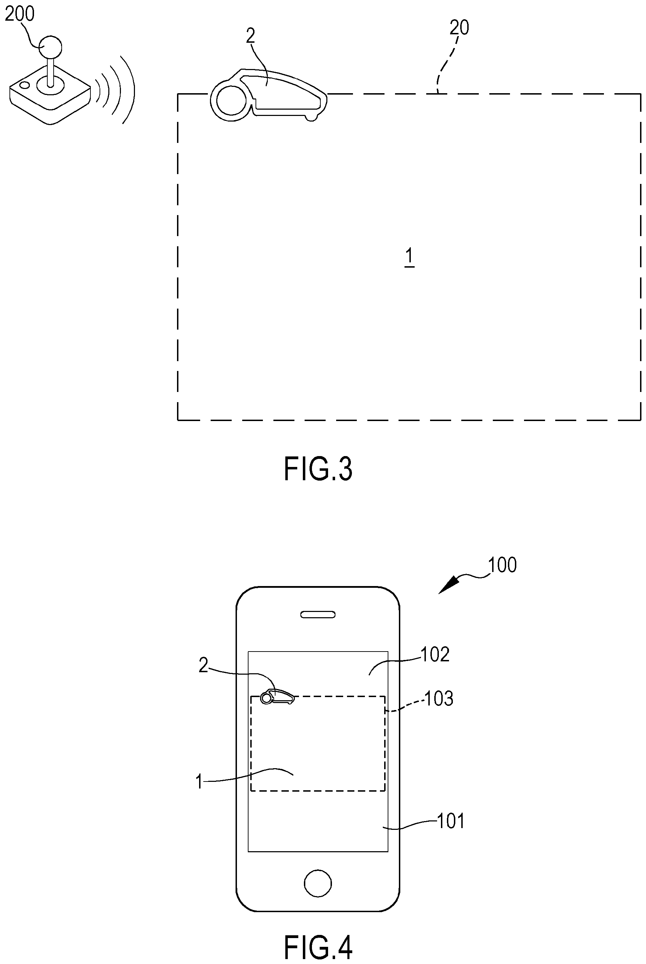

In an example not falling under the scope of the claims, the definition step of the contour 10 provides a maneuvering step of the mobile device 2 by an operator from a remote position, for example by means of a joystick 200, along a predefined trajectory 20, as schematically shown in Figure 3: in other words, the mobile device 2 can be remotely controlled by an external operator along a predefined trajectory, such that the path followed by the mobile device 2 defines the contour 10 of the working area or the reference path within the working area. If the mobile device 2 can perfectly follow this trajectory 20, the latter corresponds to the contour 10 or to the reference path thus defined.

In other words, the following step or the remote maneuvering step of the mobile device 2 allows to move the mobile device 2 itself, during an installation process, along the predetermined trajectory defining the contour 10 or the reference path. In this regard, the definition step of the contour 10 comprises a step for memorizing the path followed by the mobile device 2 during the following step or during the maneuvering step to determine the contour 10 and/or the reference path, wherein the contour and/or the reference path substantially comprise the positions assumed by the mobile device 2 detected along this path by means of the position detector 5. In particular, this memorizing step involves recording the geographic coordinates of the mobile device 2, taken along this path, on a memory physically allocated on board the mobile device 2 or on a remote memory, for example on a memory of the remote device 100 or on a memory located on a cloud.

Alternatively or in combination with the following step, 2. the example not being covered by the claims, the definition step of the contour 10 or the reference path can comprise a step of memorizing the positions assumed by an operator 50 when the latter moves along a predetermined trajectory 20. In particular, the operator 50 can be equipped with a remote device 100 (for example his/her smartphone) configured to detect his/her position, wherein preferably the remote device 100 comprises a satellite navigation system, for example of the GPS type. In other words, the operator 50 carrying a GPS sensor (or more generally a satellite sensor) travels this predetermined trajectory 20 and simultaneously allows the recording of this trajectory 20 in terms of geographic coordinates detected by the GPS sensor, so that the contour 10 or the reference path is defined. Alternatively, the coordinates associated with the contour 10 can be detected by means of a triangulation algorithm of a GSM telephone signal detected and/or emitted by the remote device 100 and carried by the operator 50 while the latter moves along this predetermined trajectory 20. This installation method is extremely advantageous in terms of simplicity, being in fact sufficient for the operator 50 to travel the contour 10 or the reference path, bringing along a device (for example a smartphone) suitable for carrying out the detection and recording of the positions assumed, the plurality of positions taken by the device defining the contour 10 or the reference path. This installation method nevertheless guarantees high precision in defining the contour, since the trajectory traveled by the operator can be detected punctually and reliably. In a further example not falling under the scope of the claims, the definition step of the contour 10 or the reference path can be carried out by using a virtual map 102 or a satellite image on which the operator can trace the contour 10 or the reference path itself, as schematically shown in Figure 4. For example, such virtual map or such satellite image can be generated by a specific search and viewing terrestrial maps service, for example the Google Maps service (owner of the company Google Inc.). This example also stands out because it is capable of achieving an optimal combination of process simplicity and precision in defining the contour 10 of the working area 1. In fact, for the definition of the working area 1, it is sufficient to perform a tracing step of a predetermined track 103 on the virtual map 102 or on the satellite image, this tracing determining the extraction of satellite coordinates relating to the track 103 to determine the contour 10 and/or the reference path. The satellite coordinates of the track on the virtual map or on the satellite image are then stored by the control unit as geographic coordinates of the contour 10 of the working area 1 of the mobile device 2. In a preferential embodiment, this virtual map or satellite image can be obtained by using a remote device 100, such as for example a smartphone, a computer or a tablet, capable of communicating with the control unit of the mobile device 2 via a communication network, in order, among other things, to transmit to this control unit the satellite coordinates of the contour 10 of the working area 1, once defined by means of the specific tracing step.

The contour 10 can define an outer perimeter of the working area 1, whose length depends on the characteristics of the working area 1 itself. Preferably but not limited to, the overall surface of the working area is of the range of tens or hundreds of square meters, but it can also be of the order of hectares or more. The installation method further comprises an association step of at least one piece of information or a parameter with at least a stretch 10a, 10b (shown schematically in Figure 6) of the contour 10, wherein this information relates to a description of this stretch 10a, 10b, in particular explicative of the type of stretch. In particular, this information may include the identification of an element adjacent to the working area in correspondence of the stretch, for example it may indicate the presence of a road, a swimming pool, a wall, a tree, a rock or of any element closely arranged to the contour 10. Furthermore, this information can be representative of the criticality of the stretch 10a, 10b, in particular related to the danger of a possible deviation of the mobile device 2 from the working area 1 in correspondence with this stretch 10a, 10b (whereby a greater criticality is assumed for example when this stretch separates the working area 1 from a road than when this stretch separates the working area 1 from a wall). This information can therefore be associated with a parameter, for example a numerical value, representative of the type of stretch 10a, 10b of the contour 10. This information can be associated with an extension, in correspondence with this stretch 10a, 10b, of a first region 11 of the working area 1 extending from this contour 10, such extension, for example, being expressed in the form of a maximum distance with respect to the closest point of the contour 10.

According to a preferential embodiment, if the mobile device 2 comprises an optical sensor, for example a camera (which can be a dedicated optical sensor or advantageously the same optical detection system 3), the operator 50, after traveling the stretch 10a, 10b, performs a predefined gesture which is captured by the optical sensor, which then allows the control unit of the mobile device 2 to interpret this gesture and consequently to associate the value of the representative parameter corresponding to this gesture to the traveled stretch 10a, 10b. Finally, the control unit can determine the extension of the first region 11 adjacent to the traveled stretch based on the value of the representative parameter.

In accordance with this preferential embodiment, it is also possible to provide that the mobile device 2 may comprise a microphone to pick up voice commands given by the operator. In this case, the operator, after having traveled the stretch 10a, 10b, proceeds to pronounce a predefined keyword (for example "wall!" or "swimming pool!") which is picked up by the microphone. Subsequently, the control unit of the mobile device 2 associates the value of the representative parameter corresponding to this keyword to the traveled stretch. Optionally, the voice command can be given by the operator to a remote device 100 carried by the operator during the following step: once the stretch to which the operator wishes to associate the parameter representative of the information is traveled, the operator can emit a voice signal to the remote device 100, which, being equipped with its own position detector, for example of the GPS satellite type, associates this information with the geographic coordinates relating to this stretch.

If, on the other hand, the definition of the contour 10 is obtained by recording a tracing on a virtual map or on a satellite image, the installation method provides that the operator can characterize any stretch of that tracing. For example, the operator can trace the potentially very critical stretches of the tracing (i.e. the potentially very critical stretches of the contour 10 of the working area 1 of the mobile device 2) with red lines and the potentially not very critical stretches of the tracing (that is, the potentially not very critical stretches of the contour 10 of the working area 1 of the mobile device 2) with blue lines. The control unit of the mobile device 2 interprets the characterization (for example the coloring) attributed by the operator to each stretch of the tracing stored on the virtual map or on the satellite image and consequently associates to each stretch of the tracing the value of the representative parameter corresponding to this characterization. Also in this case, the control unit can eventually determine the extension of the first region 11 adjacent to the stretch of the tracing, according to the corresponding value of the representative parameter.

If the contour 10 is defined by means of the following step, the installation method provides that the operator can characterize any stretch 10a, 10b traveled by typing on an interface of a remote device 100. In this case the operator 50, during the following step and in particular once the stretch of interest has been covered, proceeds to make this selection on its remote device 100, for example by typing on a smartphone: this selection can take place for example by typing a button displayed on the graphical interface of the remote device 100.

The following step can further comprise a detection step of a possible reference object found by the mobile device 2 adjacently to the path and/or adjacently to the reference path: this reference object can be a tree, a rock, a step or a chromatic variation of the ground, for example due to the passage from the turfgrass to a driveway. The installation method therefore comprises a step of association of a piece of information with the reference object, representative for example of its position, of the distance of the reference object with respect to the contour 10 and/or with respect to the reference path. The detection of a reference object placed on or near the path followed by the mobile device 2 during the installation steps, allows to obtain more information, about the positioning and/or the characteristics of the contour 10, useful for the autonomous movement of the mobile device 2 during its normal operating condition. In fact, if the piece of information associated with the reference object is representative of an obstacle (a stone, a trunk, a lighting pole, etc.), the mobile device 2 can be configured to avoid, during its normal operating condition, this object. Furthermore, if the mobile device encounters, during its own autonomous driving condition, a reference object previously detected during the installation step and to which a piece of information representative of its geographical position has been associated, the mobile device 2 can compare the measurement of its position, detected by means of the position detector 5, with the position associated with this reference object, so as to verify the consistency between the detection of its position with respect to the position of the reference object. The detection step of the reference object can be carried out by means of a proximity sensor carried by the frame of the mobile device 2, wherein this sensor is configured to evaluate the presence and the distance of this reference object with respect to the mobile device 2 when the latter moves along the contour 10, in particular along the path followed by the mobile device 2 during the following step. Similarly, this detection step of a reference object can be carried out by means of the optical detection system 3 and/or by means of the time-of-flight detection system 4 associated with the mobile device 2. In particular, the optical detection system 3 can be configured to detect the presence of a reference object, evaluate its distance from the mobile device 2 and possibly recognize the type of reference object so as to carry out the step of associating a piece of information with this reference object. Alternatively, the step of associating the information with the reference object can be carried out by using a remote device 100, such as for example a smartphone. More generally, the step of associating information with a reference object can be carried out using the same methods previously described in relation to the step of associating a piece of information with a stretch of the contour 10.

The positioning and detection of reference objects in the working area 1 has obvious advantages, since it can then be an aid to the navigation system during the movement of the mobile device 2 during operation. Referring in particular to the example of working area 1 of Figure 6, wherein a potential high criticality is represented by the presence of the swimming pool 40, it can advantageously be provided to place a reference object (for example a sign) near each corner of the pool 40, so that the subsequent detection of this reference object by the optical detection system 3 can contribute to avoid an undesired trespassing of the mobile device 2 in the swimming pool 40.

The following step can further comprise a detection step for detecting a possible change of direction performed by the operator 50 while the latter moves along the predetermined trajectory. This detection step of a change of direction is apt to allow the mobile device to follow closely the trajectory traveled by the operator 50, especially when the latter makes a sudden change of direction (for example a change of direction at right angle). In particular, this detection step allows to obtain a greater congruence between the predetermined trajectory 20 traveled by the operator and the path followed by the mobile device 2, especially in correspondence with tight curves and severe angles defined during the following step. In fact, since the following step provides for the presence of a distance between the mobile device 2 and the operator 50, it may happen that, in correspondence with a sudden change of direction by the operator 50, the mobile device 2 tends to cut or to smooth this change of direction, thus causing a difference between the trajectory traveled by the operator 50 and the path followed by the mobile device 2.

The step of detecting a change of direction can be carried out by means of a motion sensor carried by the operator 50 himself during the following step: in particular, this motion sensor can be an accelerometer configured to emit a signal representative of at least one acceleration and/or at least one orientation, which are in turn representative of the trajectory actually traveled by the operator 50 himself/herself. In greater detail, the acceleration signal can be subjected to integration in order to calculate the speed and, further, the movement, thereby obtaining the trajectory traveled by the operator 50. The motion sensor can be included in the remote device 100, in particular it can be an accelerometer of a smartphone or a tablet carried by the operator 50. The method therefore provides that the following step of the operator 50 by the mobile device 2 is carried out according to the signals detected by means of the optical detection system 3 and/or of a time-of-flight detection system 4, and also according to the signal emitted by the motion sensor carried by the operator 50.

Alternatively or simultaneously to the motion sensor, the remote device 100 carried by the operator 50 while traveling the trajectory during the following step can comprise a compass capable of immediately detecting changes in the orientation of the trajectory traveled by the operator 50.

If the mobile device 2 has an optical detection system 3 configured to be used, when the mobile device 2 is operating, for the detection of obstacles in the working area, the installation method according to the present invention can advantageously provide that the capacity of the optical detection system 3 to detect obstacles is also used during the installation of the mobile device 1. In particular, if the optical detection system 3, following the operator 5, detects an obstacle along the trajectory traveled by the operator 50 or adjacent to said trajectory, the control unit of the mobile device 1 can communicate to the operator 5 the presence of this obstacle, for example by sending a specific signal to the remote device 100 so that it can then be made explicit to the operator 50 (for example, by displaying on the screen of the remote device 100). In this way, the operator 50 is firstly allowed to remove (if possible, for example in the case of a stone) the obstacle detected by the optical detection system 3, thus maintaining the trajectory previously traveled with partial definition of the contour 10. Secondly, the operator 50 may be allowed to travel a different trajectory, partially defining the contour 10 and replacing the trajectory previously traveled and wherein the obstacle had been encountered. Alternatively, it can be provided that the control unit of the mobile device 2 autonomously defines an alternative trajectory that allows to avoid the obstacle encountered, while providing for a minimum deviation and/or a minimum divergence from the trajectory previously traveled by the operator 50. For example, as the optical detection system 3 has detected a stone along the trajectory previously traveled by the operator 50, the control unit of the mobile device 2 can ensure that the mobile device 2 travels an alternative trajectory, suitable firstly to avoid the stone and secondly to rejoin as soon as possible to the trajectory traveled by the operator 50, such alternative trajectory thus being adopted as a partial definition of the contour 10 of the working area 1 (it can be advantageously provided that such alternative trajectory is communicated to the operator 50, who, via the remote device 100, can provide approval that this alternative trajectory may be included in contour 10).

Similar measures can be adopted if the mobile device 2 has means for determining the type of land adjacent to the mobile device 2 (such means comprising, for example, the optical detection system 3 or a dedicated spectrum sensor or a dedicated capacitive sensor) and if such determining means detect that the land adjacent to the mobile device 2 is a ground (such as a ground covered with pebbles or crushed stone), on which the mobile device 2 is unable to guarantee safe operation or a ground that could damage the mobile device 2 or to particular components thereof (such as for example the rotating blade). Even in this circumstance, it can in fact be provided that the operator 50 is given the option to travel a different trajectory, partially defining the contour 10 and replacing the trajectory previously traveled and for which the unsuitable land was detected. Alternatively, it can be provided that the control unit of the mobile device 2 autonomously defines and then follows an alternative trajectory that allows to avoid the unsuitable land detected, while providing for a minimum deviation and/or a minimum divergence from the trajectory previously traveled by the operator 50. The alternative trajectory traveled by the mobile device 2 can therefore be adopted as a partial definition of the contour 10 of the working area 1 (it can be advantageously provided that this alternative trajectory is communicated to the operator 50, who, through the remote device 100, can provide approval that this alternative trajectory is included in the contour 10).

Both the aforesaid situations (detection of an obstacle and detection of an unsuitable land) can therefore be managed, among other things, allowing the operator 50 to walk alone a different trajectory than the previous one that led to the detection of the obstacle or of the unsuitable land. This management procedure can advantageously provide that, during the following of the operator 50 and the consequent definition of the contour 10 of the working area 1, a plurality of intermediate points are identified and then stored in memory (in particular in terms of geographic coordinates). For the identification of the intermediate points during the installation of the mobile device 2, different criteria can be adopted. A first plausible criterion provides that between two consecutive intermediate points there is a predetermined distance, measured along the trajectory traveled by the mobile device 2 (for example an intermediate point every meter traveled by the mobile device 2 or every ten meters traveled by the mobile device 2). A second plausible criterion provides instead that the identification of the intermediate points takes place according to a predefined temporal frequency (for example an intermediate point identified every ten seconds of advancement of the mobile device 2 or every minute of advancement of the mobile device 2). A third plausible criterion (alternative or combinable with the two previous criteria) then provides that all the points deemed significant of the trajectory traveled by the mobile device 2 are identified and saved as intermediate points. In particular, significant points (and therefore identified and saved as intermediate points) can be considered those at which a change of direction of advancement of the mobile device 2 occurs and/or those at which an event occurs which is relevant for the purposes of definition of the contour 10. A relevant event such as to justify the identification of an intermediate point may precisely be the detection of an obstacle or an unsuitable land. Furthermore, a relevant event that justifies the identification of an intermediate point may be the deficiency, in particular beneath a predetermined accuracy threshold, in the detection of the position through the GNSS system or, even more, the loss of reception of the satellite signal (i.e. entry point into a so-called "shaded area").

In the case of detection of an obstacle or detection of an unsuitable land or in the case of loss of reception of the satellite signal, the operator 50 may therefore be required to go back to the last intermediate point identified and memorized and to resume definition of the contour 10 along a new trajectory starting just from this last intermediate point. In order to guide the operator 50 to the last intermediate point, the control unit of the mobile device 2 can generate specific indications and then send them to the remote device 100 (in particular information that can be displayed in text form or in graphic form on the screen of the remote device 100).

During the installation of the mobile device 2, the provision of the intermediate points is considerably advantageous, since it allows to solve any critical issues found in the definition of the contour 10 without the operator 50 being required to travel the entire trajectory from the beginning. It is further emphasized that the recording of the intermediate points also brings advantages in the operation step of the mobile device 2. For example, if the contour 10 includes a stretch permanently placed in a shaded area of the satellite signal, it is possible to store as intermediate points both the entry point into this shaded area and the exit point from this shaded area, thus allowing the mobile device 2 in operation to travel the stretch between these intermediate points by implementing a type of navigation different from satellite navigation.

By way of example and not as a limitation, the installation method (in particular the mapping step) may also comprise a step of obtaining, within the working area 1, according to the type of information associated with a stretch 10a, 10b of the contour 10 during the association step described above, a first region 11 interposed between the contour 10 and a first boundary 21 placed as a demarcation of the first region 11, as shown schematically in Figures 5 and 6. The first region 11 extends inwardly starting from the contour 10 towards the working area 1 up to a first boundary 21 defining a limit of the first region 11. In particular, this first region 11 can extend from the contour 10 to the first boundary 21 of a measure (fixed or variable), advantageously comprised between 50 mm and 1000 mm, more particularly between 100 mm and 400 mm, wherein this measure represents the distance calculated between the contour 10 and the first boundary 21. The method provides to assign to the first region 11 a first tolerance threshold for estimating the position of the mobile device: this tolerance threshold defines a limit about the maximum tolerable error in detecting the position of the mobile device 2 when the mobile device is located in the first region 11 or it is deemed to be in the first region 11 during its normal operating condition. This tolerance threshold can be expressed in dimensional terms: for example it can be envisaged that the error in the detection of the position of the mobile device 2 does not exceed a predetermined threshold value, this threshold value being for example less than 300 mm, in particular less than 200 mm, even more particularly between 50 mm and 120 mm.

The contour 10 can be divided into a first stretch 10a associated with a first parameter representative of the typology of the contour 10 in correspondence with this first stretch 10a, and a second stretch 10b associated with a second representative parameter of the typology of the contour 10 in correspondence with this second stretch10b, as schematically shown in Figure 6. The first region 11 therefore comprises a first portion 11a and a second portion 11b, wherein the first portion 11a extends between the first stretch 10a and the first boundary 21, while the second portion 11b extends between the second stretch 10b and the first boundary 11. In this embodiment, the distance between the first stretch 10a and the first boundary 21 is different from the distance between the second stretch 10b and the first boundary 21, defining an extension of the first portion 11a of the first region 11 different from the extension of the second portion 11b of the first region 11. Figure 6 shows, by way of example, a second portion 11b of the first region 11 having a extension f greater than the extension k of the first portion 11a of the first region 11. In particular, Figure 6 shows that the distance between the second stretch 10b and the first boundary 21 is greater than the distance between the first stretch 10a and the first boundary 21.

This preferential embodiment is extremely advantageous, since it allows, among other things, to adapt the extension of the first region 11 to the type of installation adjacent to the working area 1 and therefore to the danger of a possible deviation of the mobile device 2 during a normal operating condition. Not surprisingly, therefore, in the representation shown in Figure 6, the portion of the first region 11 with a greater extension (i.e. the second portion 11b) is adjacent to the swimming pool 40, because a possible deviation of the mobile device 2 into the swimming pool 40, besides being likely to cause irreversible damage, would seriously harm the safety of people bathing in the swimming pool 40. Always in the representation shown in Figure 6, the portion of the first region 11 with a minor extension is adjacent to the flower bed 85, because a possible deviation of the mobile device 2 into the flower bed 85 would be at the most likely to bring the mobile device 2 in contact with the shrubs of the flower bed 85, such contact being unlikely to damage the mobile device 2 or the shrubs and also being possibly detected by a proximity sensor, if present on board the mobile device 2. Finally, it should be noted that in the representation shown in Figure 6, the first region 11 is not adjacent to the driveway 49, since the operator during the installation of the mobile device 2 evidently considered as unproblematic any crossings of the driveway 49 by the mobile device 2, for example to switch, during operation, from the left side to the right side of the working area 1 or vice versa. On the contrary, if the working area 1 includes a high risk region, such as for example the swimming pool 40 delimited by the second stretch 10b as shown in Figure 6, a representative parameter is associated with this second stretch 10b of the contour 10 of said risk zone, such that the extension f of the second portion 11b of the first region 11 associated with this second stretch 10b is greater than the extension k of the first portion 11a of the first region 11 associated with the first stretch 10a of the contour 10. Similarly, Figure 6 shows, adjacent to the contour 10 represented by the outer perimeter of the working area, a first portion 11a of the first region 11 having a relatively limited extension. In this case the representative parameter of the first stretch 10a associated with this first portion 11a can indicate the presence of a perimeter wall delimiting the working area 1: consequently the risk or the danger potentially determined by the approach of the mobile device towards this first stretch 10a is reduced if compared to the one associated with the second stretch 10b. This risk assessment acquires particular relevance in light of the uncertainty in assessing the position of the mobile device 2.

In the embodiment of the installation method which makes use of following means on board the mobile device 2, the operator, having traveled a predetermined stretch of the contour 10 of the working area 1 and having been followed by the mobile device 2, communicates to the control unit of the mobile device 2 the representative parameter of the stretch traveled, using an appropriate coding. Once the value of the representative parameter of a stretch of the contour 10 is known, the control unit of the mobile device 2 consequently determines the extension of the first region 11 (and of any further subsequent regions) adjacent to this stretch on the basis of this value of the representative parameter, determining in particular a rather considerable extension when this parameter is representative of a potentially very critical stretch of the contour and a relatively small extension when this parameter is representative of a potentially not very critical stretch of the contour.

The mapping step can further comprise the definition of a second region 12, shown schematically in Figures 5 and 6, extending inwardly from the first boundary 21 towards the working area 1, this second region 12 being associated with a second tolerance threshold different from the first tolerance threshold of the first region 11. In particular, the second tolerance threshold is greater than the first tolerance threshold. In other words, the second region 12 allows the mobile device 2 to have a lower accuracy in detecting or estimating its position than required by the first region 11. Merely by way of example, if in the first region 11 a maximum tolerance is required in detecting or estimating the position of the mobile device 2 of less than 200 mm, a maximum tolerance of less than 500 mm may be required within the second region 12 (the second tolerance threshold associated with the second region 12 being therefore between 200 mm and 500 mm). As shown in Figure 5 and further in Figure 6, the extension y of the second region 12 is greater than the extension x of the first region 11 in correspondence of the same stretch of the contour 10. In the representation shown in Figure 5, wherein it is assumed that all the stretches of the contour 10 of the working area 1 have the same characteristics, it happens that the extension x of the first region 11 is advantageously minor than the extension y of the second region 12.

As previously described, the extension of the second region 12 starting from the first boundary 21 towards the inner part of the working area 1 can also be associated with a single representative parameter of the first or second stretch 10a, 10b of the contour 10. In other words, the parameter representative of the first stretch 10a of the contour 10 defines an extension of the first portion 11a of the first region 11 and a corresponding extension of a first portion 12a of the second region 12, wherein these extensions are different from each other. In particular, the extension of the first portion 11a of the first region 11 is minor than the extension of the first portion 12a of the second region 12. Similarly, the representative parameter of the second stretch 10b of the contour 10 defines an extension of the second portion 11b of the first region 11 minor than the extension of a corresponding second portion 12b of the second region 12. In a preferential embodiment, the ratio between the extension of the second region 12 and the extension of the first region 11 remains constant as the value of the corresponding representative parameter changes. The first boundary 21, marking out the first region 11 and the second region 12 to separate the region where the first tolerance threshold is effective from the region where the second tolerance threshold is effective, can be defined by a line having theoretically infinitesimal thickness or it can be defined by a hysteresis threshold or by a hysteresis band.

The mapping step may further comprise a step for determining at least a third region 13, shown schematically in Figures 5 and 6, obtained in the working area 1 and extending from a second boundary 22, placed between the second region 12 and the third region 13, towards the inner part of the working area 1. The third region 13 is given a respective third tolerance threshold for estimating the position of the mobile device 2, wherein this third tolerance threshold defines a limit about the maximum tolerable uncertainty of the detection or of the estimate of the position of the mobile device 2 within the working area 1. In particular, the third tolerance threshold is greater than the second tolerance threshold. The third region therefore represents a zone with low potential risk, such that a not particularly precise detection or estimate of the position of the mobile device 2, or at least less precise than required when the mobile device 2 is positioned in the first region 11 or in the second region 12, is not considered a potential factor of risk or danger. If the working area 1 comprises only a first region 11, a second region 12 and a third region 13, the latter extends from the second boundary 22 to fully cover the internal region of the working area 1, as shown schematically in the attached Figures 5 and 6. However, the possibility of providing further regions, for example a fourth region inside the third region 13 and so on, to define a plurality of regions each having a predetermined tolerance threshold, wherein the predetermined tolerance thresholds increase progressively starting from the contour 10 towards the inner part of the working area 1, is not excluded. Advantageously, an increase in the extension of the regions starting from the contour 10 towards the inner part of the working area 1 can also be envisaged.

Similarly to what has been previously described and in case there is a fourth region delimiting the third region 13, the representative parameter of the first or second stretch 10a, 10b of the contour 10 can further define the extent of this third region 13, measured as a distance between the second boundary 22 and a third boundary between the third and fourth regions. If instead the working area 1 includes only the first, second and third regions, the extension of the third region 13 towards the inner part of the working area 1 is defined in such a way as to determine the complete coverage of the internal portion of the working area 1.

To sum up what described above, the mapping step, besides providing the definition of the contour 10 of the working area 1, can also include the definition of a first region 11 of the working area 1 of the mobile device 2 developing between the contour 10 and a first boundary 21, of a second region 12 of the working area 1 of the mobile device 2 developing between the first boundary 21 and the second boundary 22 and of a third region 13 of the working area 1 of the mobile device 2 developing between the second boundary 22 towards the inner part of the working area 1, wherein each of these regions has a respective tolerance threshold increasing from the external contour 10 towards the inner part of the working area 1.

As previously mentioned, the mapping step can further comprise a definition step of the position of a reference point 30 within the working area 1 and advantageously a step of definition of an area of influence 41 delimited by an auxiliary boundary 42, and adjacent to this reference point 30. The reference point 30 defines a fixed base with respect to which it is possible to determine the position of the mobile device 2. Alternatively or in combination, the fixed base can comprise a dock station for recharging the battery of the mobile device 2, being in this case configured to receive the mobile device 2 in a predetermined position and according to a predetermined orientation. Communication means are advantageously provided on board the mobile device 2 and the reference point 30, in order to allow the exchange of signals between the mobile device 2 and the reference point 30.

The provision of the area of influence 41 is functional to guarantee an optimal approach of the mobile device 2 to the reference point 30, in particular in order to carry out the battery recharging operation. Since the detection of the position of the mobile device 2, as is generally the case within the working area 1, is not particularly suitable for ensuring the position and orientation required so that battery charging is enabled, once the mobile device 2 is located in the area of influence 41, the control of the position and of the orientation of the mobile device 2 takes place according to specific methods which can include the exchange of signals with the fixed base.

The reference point 30 can comprise a position detector, for example a satellite detector (in particular of the GPS type) configured to receive a signal representative of its position in terms of geographic coordinates. Alternatively, the mapping step can comprise a definition step of the position of the reference point 30 by recording the position of the mobile device 2 during a recharging operation thereof at the fixed base. In other words, when the mobile device 2 is positioned in correspondence with the reference point 30 during a recharging operation, the position of the mobile device 2 is detected by the on-board position detector and stored in memory, thus allowing the definition of the position of the reference point 30.

If the installation method provides for the definition of the position of the reference point 30, it is possible to define the contour 10, the first boundary 21, the area of influence 41 and the relative auxiliary boundary 42 by means of relative coordinates with respect to the reference point 30. In particular, the position of the mobile device 2 can comprise information about a distance and an angle of the mobile device 2 with respect to the reference point 30. In greater detail, the reference point 30 and/or the mobile device 2 can comprise one or more sensors, for example a beacon, configured to detect or estimate their mutual distance, just as they can comprise one or more sensors, configured to detect or estimate their mutual orientation.

The installation method also provides for a validation step of the contour 10 and/or of the reference path: this validation step provides for a coherence check step of the contour 10 and/or of the reference path to ascertain that the geographic coordinates representative of the contour 10 define a closed line and/or that the geographic coordinates representative of the reference path lead to a target position, for example to the reference point 30 coinciding with the charging base. If the contour 10 does not define a closed line, the installation method provides for the emission of an error message: the validation step can therefore comprise a subsequent correction step of the contour 10 or can advantageously provide for the initialization of a further definition step of the whole contour 10. The coherence check step can be implemented by the control unit of the mobile device 2, for example in the case where the installation method provides the following step of the operator 50 by the mobile device 2. Alternatively, the coherence check step can be carried out by the remote device 100 itself, for example if the definition step of the contour 10 is carried out on a map displayed on a graphical interface of the remote device 100. According to a further alternative, the coherence check step can be performed by special cloud-based processing means.

The validation step may further comprise a reproduction step of the contour 10, wherein the mobile device 2 independently travels the contour 10 and/or the reference path so as to provide evidence of the fact that the contour 10 or the reference path has been correctly received by the mobile device 2. This reproduction step preferably involves supervision by an operator 50 about the movement of the mobile device 2 along the contour 10, so as to verify the correct reproduction of the same by the mobile device 2: it is in fact possible that any errors during the following step of the operator 50 by the mobile device 2, or the presence of obstacles along the contour 10, such as for example excessive slopes, stones or trees, may inhibit correct movement of mobile device 2.

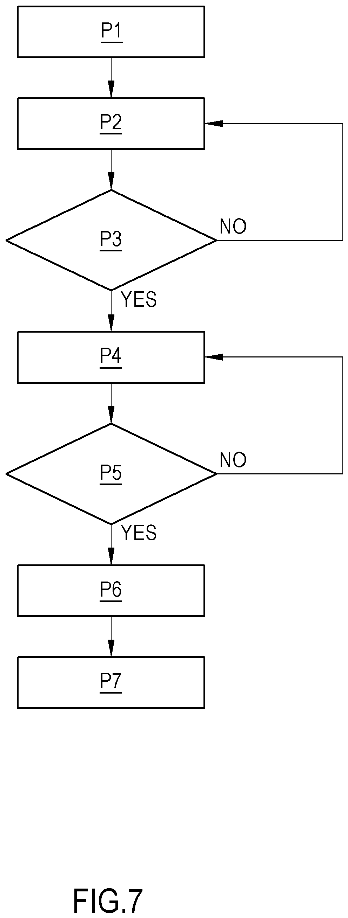

Furthermore, the validation step can comprise a visualization step of the contour 10 and/or of the reference path on a virtual map displayed on the remote device 100, so as to show a virtual representation of the contour 10. This visualization step can include a chromatic variation of the contour itself if the validation step gives a positive result. The flowchart of Figure 7 represents an embodiment of the installation method according to the present invention, wherein:
- block P1 represents a start-up step of the installation method: this step can preferably be started by the operator via the remote device 100, in particular via smartphone;
- block P2 represents a recognition step of the operator 50 by means of a camera (or in general through the optical detection system 3), in particular a camera carried by the mobile device 2 and connected to the mobile device 2, or a camera of a remote device 100. Alternatively, this recognition step can be carried out by entering a password apt to allow an association between the mobile device 2 and the remote device 100. Advantageously, at the same time as the recognition step of the operator 50, it is carried out the definition step of the reference distance between the operator 50 and the mobile device 2, detecting the distance between the operator 50 and the mobile device 2 at the time of recognition of the operator 50 and assuming the reference distance being equal to the detected distance;
- block P3 provides a step for checking the outcome of the recognition step: if the recognition check does not return a positive result, the method provides to go back to block P2, otherwise the installation method allows to proceed to the next block P4;
- block P4 provides a mapping step of the working area by means of a definition step of the contour 10: this mapping step includes a following step of the operator by the mobile device along a trajectory traveled by the operator himself, or, alternatively or in combination, this mapping step comprises a visualization step of a virtual map or of a satellite image on a graphical interface of a remote device and consequent tracing of a predetermined path. If carried out by following the operator 50, the mapping step may employ the driving of the mobile device 2 according to the feedback control logic of the schematic representation in Figure 8. Having set the reference distance in the previous block P2, the distance between the mobile device 2 and the operator 50 is then continuously monitored during the following of the operator 50 by the mobile device 2. After hence comparing the monitored distance with the reference distance, the control unit of the mobile device 2, according to the outcome of the comparison, constantly monitors the progress of the mobile device 2, imparting to the moving means any commands for changing the advancement speed and/or the advancement direction. During the mapping step referred to in block P4, the operator 50 can communicate to the control unit of the mobile device 2 information relating to the type of contour 10 of the working area 1, in particular the parameters described above representative of the potential criticality of the stretches 10a, 10b of the contour 10;
- block P5 provides a step for checking the consistency of the contour 10 by the control unit of the mobile device 2, suitable for verifying that the contour 10 acquired by the control unit after the following step does not present errors such as making the contour 10 unsuitable to be used as a contour during the subsequent operation of the mobile device 2 (in particular, an evident error arises when the contour 10 does not define a closed profile). In particular, block P5 further provides for a step of reproduction of the contour 10 performed independently by the mobile device 2, this reproduction step being suitable for providing the operator 50 with visual evidence that the contour acquired by the mobile device 2 during the following step is actually consistent with the trajectory followed by the operator 50 during the following step. If the consistency check of the contour 10 or the reproduction of the contour 5 does not return a positive result, the method provides for going back to block P4 (as shown in Figure 7) or as an alternative to block P2. Otherwise, the installation method allows to proceed to the next block P6;
- block P6 provides a validation step by the operator 50 who manually confirms that the mapping procedure has been successful;
- block P7 provides for the completion of the mapping procedure, by means of a memory saving step of the contour 10 of the working area 1, this saving providing in particular the memorization of the absolute or relative geographic coordinates of the contour 10, these coordinates therefore remaining available to be subsequently used to control the movement of the mobile device 2 during operation.

### Installation method based on the recognition of the human figure

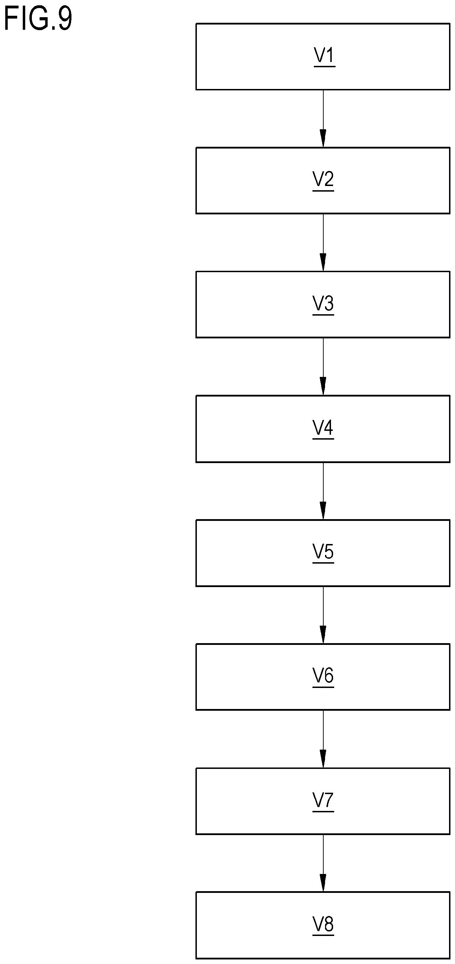

The present invention contemplates to base the installation method of the mobile device on the provision of an optical detection system 3 on board the mobile device 2 (which may comprise the camera integral with the mobile device 2 shown in Figure 2 or a different sensor device, for example a 3D radar sensor) and on the provision of an installation method based on the recognition of the human figure. Advantageously, a preferred embodiment also makes use of a remote device 100 provided to the operator 50 (in particular a smartphone equipped with display and typing means, for example a touchscreen) and connected via radio frequency (for example via Bluetooth) to the control unit of the mobile device 2. Even more advantageously, the use of a dedicated application on the remote device 100 can be provided, by means of which the operator 50 can interact with the control unit of the mobile device 2 both during the installation step and the operating step. This embodiment is to be considered preferred, because, in addition to solving the technical problems underlying the present invention, it completely overcomes the critical issues encountered in relation to the installation method of document US2019/0163174A1 which provides that a marker is attached to the terminal that the mobile device must follow. With regard to the embodiment of the installation method which will be described below (referring in particular to Figure 9), it is necessary to underline how everything described more generally in the previous paragraphs regarding the mobile device and the installation method according to this invention is applicable to this embodiment and is intended to be fully incorporated herein, except what expressly excluded and except what manifestly incompatible.

Advantageously, an initial definition step of a profile connected to the operator 50 can be provided. In this initial definition step, the control unit of the mobile device 2 acquires, by means of the optical detection system 3, peculiar characteristics about the physiognomy of the operator 50 for this purpose framed by the optical detection system 3, such as height, shoulder width, head shape, eye color and possibly also clothing (if the operator 50 is required to wear a work uniform). In the definition step, the operator 50 may be required to make at least one turn on himself/herself to acquire various views regarding his/her physiognomy (because the operator 50, in the subsequent installation of the mobile device 2, will then be framed by the system optical detection 3 according to different orientations). Advantageously, some parameters which may constitute peculiar characteristics regarding the physiognomy of the operator 50 can be entered manually by the operator 50 by means of the remote device 100, preferably using the specific application. Furthermore, the control unit of the mobile device 2 can have an estimator by which, starting from peculiar characteristics acquired by means of the optical detection system 3 and/or from peculiar characteristics communicated by the operator 50, further characteristics regarding the physiognomy of the operator 50 are then obtained automatically (for example, starting from the height, the length of the legs can be obtained with a sufficient approximation).

Advantageously, in addition to the parameters relating to the shape of the operator 50, dynamic parameters can be acquired. For example, the operator 50 may be required to go on a short walking test during the initial definition step, so that the control unit of the mobile device 2 can determine the speed and/or length of the steps of the operator (alternatively, the length of the steps of the operator 50 can be determined indirectly by the estimator starting from the length of the legs). The initial definition step can also be employed to allow the operator 50 to communicate to the control unit of the mobile device 2, via the optical detection system 3, the coding that the operator 50 intends to adopt during the subsequent steps of the installation method (in particular during the subsequent following step). For example, the operator 50 can show the mobile device 2 the gestures by which the critical indications of the stretch 10a, 10b of the contour 10 will then be expressed, if the operator then intends to adopt this possible option.

Advantageously, the operator 50 can be subjected to training during the initial definition step. In particular, if the control unit of the mobile device 2 should experience an excessive speed during the walking test and therefore not compatible with the subsequent steps of the installation method (in particular with the subsequent following step), the operator 50 is informed about it (preferably through the remote device 100), with the request to repeat the walking test until a sufficiently reduced speed is reached to be compatible with the subsequent steps of the installation method.

Additionally, the operator 50 can be instructed about the minimum distance and/or about the maximum distance and/or about the optimal distance to be maintained with respect to the mobile device 2 during the subsequent steps of the installation method (in particular the subsequent following step), these distances being able to assume fixed values or more conveniently variable values depending on the dimensional parameters of the operator 50, in particular on the height. Also in this case, the position of the operator 50 with respect to the mobile device 2 in the initial definition step can be corrected by means of the production of instructions by the control system of the mobile device 2 (instructions then made explicit to the operator 50, preferably through the remote device 100). Preferably, such instructions can be requested so that the operator shall approach or move away from the mobile device 2, until a distance is established between the operator 50 and the mobile device 2 substantially coinciding with the optimal distance. It can be provided that, during this procedure, the distance between the operator 50 and the mobile device 2 is calculated (in addition or as an alternative to a possible calculation based on the processing of the images captured by the optical detection system 3) using the time-of-flight detection system 4, and therefore the transceiver 4a installed in the mobile device 2 and in connection (in particular through Bluetooth technology) with the remote device 100 carried by the operator 50, since the time-of-flight detection system allows a particularly precise determination of the distance.

The initial definition step ends with the memorization of the profile of the operator 50, this profile being able to include images of the operator 50 and/or information about the dimensional parameters and/or the shape and/or the pace of the same. Memorizing the profile prevents the operator 50 from repeating the initial profile definition step several times for the same mobile device 2. In the event that the mobile device 2 belongs to a fleet, it can be even more conveniently provided that the memorized profile is valid for all mobile devices in the fleet. The definition and memorization of the profile of the operator 50 are also functional to increase the safety of the mobile device 2, avoiding that people not identified as specialized operators can take care of the installation of the mobile device 2. Obviously, this does not at all preclude that the mobile device installation can be performed by different operators. For this purpose, it is indeed provided that a plurality of profiles can be registered in the memory associated with the control unit of the mobile device 2, each of which relates to a distinct operator.

The flow chart of Figure 9 represents an embodiment of the above described initial definition step of the profile, wherein:
- block V1 represents the start-up of the definition step, which can be performed by the operator 50 by means of a specific application on the remote device 100;
- block V2 represents the establishment of a radio-frequency connection (for example via Bluetooth) between the control unit of the remote device 100 and the control unit of the mobile device 2;
- block V3 represents the visualization, on the screen of the remote device 100, of an application menu dedicated to the definition of the operator profile 50 that will then proceed to the installation of the mobile device 2 and in particular to the definition of the contour 10 in the subsequent following step;
- block V4 represents the entry, in particular by typing on the user interface of the remote device 100, of the value of the height of the operator 50 and of the values of any further parameters representative of the physiognomy of the operator 50. Block V4 can further include the subsequent calculation, specifically by the control unit of the mobile device 2, of the optimal distance (depending on the height of the operator 50) between the mobile device 2 and the operator 50;
- block V5 represents the positioning of the operator 50 at the optimal distance (both to obtain the shape thereof, and to carry out the subsequent following step) with respect to the mobile device 2. In particular, the operator 50 can be given, through the remote device 100, instructions on approaching or moving away from the mobile device 2 until the operator 50 is positioned at a distance substantially coinciding with the optimal distance. In this regard, it is observed how these instructions can be given to the operator 20 in real time, since the time-of-flight sensor making use of the radio frequency connection between the mobile device 2 and the remote device 100 (in particular through Bluetooth technology) allows an immediate detection of the distance between the mobile device 2 and the remote device 100 (assumed to coincide with the distance between the mobile device 2 and the operator 50);
- block V6 represents the acquisition of the shape of the operator 50, by means of the optical detection system 3 (in particular camera or 3D radar sensor) of the mobile device 2. In particular, the operator 50 can be given, through the remote device 100, the instruction to turn around himself/herself one or more times, so that the optical detection system 3 can capture images of the operator 50 according to different frames and therefore the control unit of the remote device 100 can reconstruct with better accuracy the physiognomy of the operator 50;
- block V7 represents the creation of the profile of the operator 50 which takes place automatically by the control unit of the mobile device 2, on the basis of the images of the operator 50 captured in block V6, possibly in association with the representative parameters of the physiognomy of the operator referred to in block V4;
- block V8 represents the conclusion of the definition step, which may include a check of the correctness of the profile of the operator 50 created in block V7. If this check provides a favorable result, the operator 50 is informed, in particular by visualization on the user interface of the remote device 100, that his/her profile has been correctly created and registered and then it is possible to proceed to the subsequent steps of the device installation method of the mobile device 2. If on the contrary this check does not provide a favorable result, the operator 50 is informed, in particular by visualization on the user interface of the remote device 100, of the need to repeat the definition step and thus returns to block V4.

Once the initial profile definition step has been successfully performed, it will be sufficient for the operator 50 to perform a recognition step of the profile at each subsequent installation procedure performed by means of the mobile device 2. In particular, the recognition step requires only that the operator 50 is framed by the optical detection system 3 in order to capture his/her images and consequently obtain the shape and/or the relative parameters. To this end, the operator 50 may be required to position himself/herself at the optimal distance with respect to the mobile device 2 and/or to turn one or more times on himself/herself. The shape and/or the parameters acquired in the recognition step are then compared with the shapes and/or the parameters referred to in the profiles stored in the memory of the control unit of the mobile device 2. Once a substantial coincidence has been found between the shape and/or the parameters acquired in the recognition step and the profile and/or the parameters of the operator 50, all further parameters of the operator 50 that may be useful for the installation of the mobile device 2, in particular in the subsequent following step, are automatically loaded.

Finally, the mapping step, according to the present invention based on the recognition of the human figure, provides that the mobile device 2 chases the operator 50, following his/her shape by means of the optical detection system 3 and reproducing the trajectory travelled. The mobile device 2, compatibly with the limits imposed by its maximum advancement speed, advantageously remains at the optimal distance from the operator 50. While the operator 50 is being followed, the control unit of the mobile device 2 acquires with an appropriate frequency his/her position (in terms of absolute coordinates through the GNSS system or in terms of relative coordinates with respect to a predetermined reference point), thus allowing to define the contour 10 of the working area 1. In this regard, it is intended to emphasize how, thanks to the optical detection system 3, the mobile device 2 can detect precisely and immediately any changes in the orientation of the operator 50 due to changes of direction, so that the mobile device 2 has the ability to reproduce, in a quite reliable manner, the trajectory traveled by the operator 50 also in correspondence of curved stretches or of sharp edges.

Advantageously, the time-of-flight detection system 4, connected in radio frequency (in particular through Bluetooth technology) with the remote device 100 carried by the operator 50, is kept active during the mapping step, given its ability to determine with accuracy the distance between the mobile device 2 and the remote device 100 (which is assumed to coincide with the distance between the mobile device 2 and the operator 50, being the remote device 100 carried by the operator 50). In particular, the time-of-flight detection system 4 can be used to validate the distance between the mobile device 2 and the operator 50 detected through the optical detection system 3. Should it be noticed that the distance detected by the time-of-flight detection system 4 exceeds the maximum permissible distance between the mobile device 2 and the operator 50 and/or differs clearly from the distance detected through the optical detection system 3, the mapping step can be stopped. In any case, it is intended to underline how, in the mapping step, the key role is assigned to the optical detection system 3 given the ability of the latter to follow the shape of the operator 50 and to detect changes in his/her orientation with precision and immediacy. Therefore, the time-of-flight detection sensor can only be assigned an auxiliary control and validation role.

Advantageously, it is provided that the operator 50 and the control unit of the mobile device 2 can exchange information during the mapping step, through the remote device 100. By way of example and not as a limitation, it can be provided that the operator 50, moving along a stretch 10a, 10b of the contour 10 of the working area 1, communicates to the control unit of the mobile device 2, using the application on the remote device 100, the index representative of the criticality of this stretch 10a, 10b. Always as an example and not as a limitation, it can be provided that the control unit of the mobile device 2 communicates to the operator 50 that, due to an excessively high pace, he/she is approaching the maximum distance with respect to the remote device 100, as well as it can send in real time to the operator 50 the contour 10 (viewable by means of a map provided in the application on the remote device 100) during the definition of the same, in order to allow operator 50 to immediately detect any stretches of contour 10 not correctly acquired by the control unit of the mobile device 2.

### Operating method

The operating method of a mobile device, for example a mobile device 2 according to the previous description, inside the working area 1 defined by the previously described installation method, is described below. Operating method means the steps implemented by the mobile device 2 during its normal operating condition, i.e. during an autonomous driving condition within the working area 1: therefore the operating method comprises subsequent steps with respect to the previous steps described in relation to the installation method, since the latter is adapted to determine the working area 1 itself and the relative contour 10 within which the mobile device 2 is configured to move.

The operating method according to the present example provides a detection step of the position of the mobile device 2 within the working area 1 and a step for estimating the uncertainty of its position. In particular, this step may involve the determination of the position of the mobile device 2 in terms of absolute coordinates detected by means of a satellite sensor (preferably of the GPS type mounted on board the mobile device 2), or in terms of relative coordinates with respect to the reference point 30.

The operating method therefore provides for the identification of the region where the mobile device 2 is located: in particular, the method provides for verifying whether the mobile device 2 is located within the first region 11, within the second region 12, within the third region 13 (if provided) or within the further regions (if provided) obtained in the working area by means of the previously described installation method.

The operating method can therefore provide for comparing the uncertainty detected in the position of the mobile device 2 with the tolerance threshold associated with the region within which the mobile device 2 is located and/or with tolerance thresholds associated with the close regions of the working area 1. If the uncertainty detected in the position of the mobile device 2 is greater than the tolerance threshold of the region wherein the mobile device is located, the method advantageously provides for comparing the uncertainty with the tolerance threshold of a more internal region (being the tolerance threshold of a predetermined region generally minor than the tolerance thresholds of the regions obtained within this predetermined region).

Given a certain scheduling of the mobile device 2, so that during its operation the mobile device 2 must provide for the maintenance of a predetermined portion of the working area 1, it is advisable that the mobile device 2 should operate in the region whose tolerance threshold is immediately greater than the estimated uncertainty of the position of the mobile device 2. Assuming that the scheduling of the mobile device 2 requires that the mobile device 2 should provide for the maintenance of the entire working area 1, it is advisable that the mobile device 2 should operate in the first region 11 when the position of the mobile device 2 is most reliable, i.e. when the estimated uncertainty of the position of the mobile device 2 is minor than the first tolerance threshold, that is the tolerance threshold assigned to the first region 11 during the mapping step of the installation method. Therefore, if the mobile device 2 is detected to be located within the first region 11 and the uncertainty in detecting the position of the mobile device 2 has been estimated to be minor than the first tolerance threshold, the method provides for enabling the mobile device 2 to operate in the first region 11 of the working area 1, as long as the estimated uncertainty remains lower than the first tolerance threshold or as long as the mobile device 2 has completed the maintenance of the first region 11. In conjunction with a detection of a maximally reliable position of the mobile device 2 (i.e. when an uncertainty lower than the first tolerance threshold has been estimated), it can be further provided that, having been detected in a region of the working area 1 different from the first region 11 (for example in the second region 12), the mobile device 2 is allowed to enter the first region 11 and therefore to operate in the first region 11.

On the contrary, if the mobile device 2 has been detected to be located within the first region 11 and the uncertainty in the measurement of the position has been estimated to be greater than the first tolerance threshold, the operating method provides for comparing the previously estimated uncertainty firstly with the second tolerance threshold and then possibly with the third tolerance threshold, that is to say with the tolerance thresholds assigned during the mapping step of the installation method to the second region 12 and the third region 13 respectively. If the uncertainty estimated in the measurement of the position of the mobile device 2 is minor than the second tolerance threshold, the method can provide to control the movement of the mobile device 2 leaving the first region 11 through the first boundary 21 to position itself within the second region 12. Alternatively, if the uncertainty estimated in the measurement of the position of the mobile device 2 is greater than the second tolerance threshold but minor than the third tolerance threshold, the method can provide to control the movement of the mobile device 2 towards the third region 13 first by crossing the first boundary 21 and then the second boundary 22.

If, on the other hand, the uncertainty in detecting the position of the mobile device 2 is minor than the first tolerance threshold provided for the first region 11, the method provides for allowing the mobile device 2 to remain within the first region 11 to complete its operations of land maintenance. It should be noted that, if the uncertainty in the detection of the position of the mobile device 2 is minor than the first tolerance threshold, it is consequently also lower than the second tolerance threshold and the third tolerance threshold (and in general minor than the tolerance threshold assigned to any region of the working area 1), thus the method can provide for allowing the free movement of the mobile device 2 within the entire working area 1 to complete the maintenance operations of the land.

If in the mapping step a plurality of regions have been obtained from the working area 1 according to a pattern such that, given an n-th region, this n-th region extends internally to the (n―1)-th region and simultaneously the (n+1)-th region extends internally to the n-th region and each region of this plurality has been assigned a respective tolerance threshold regarding the uncertainty in the position of the mobile device 2 in the region according to a sequence whereby the tolerance threshold of the n-th region is greater than the tolerance threshold of the (n―1)-th region and is minor than the tolerance threshold of the (n+1)-th region, the operating method according to the present example provides that the mobile device 2 is allowed to operate in a region of such plurality whose tolerance threshold is greater than the uncertainty in the detected and/or estimated position of the mobile device 2 (being possibly moved there to starting from a different region of the working area 1, in particular from a region whose tolerance threshold is minor than the uncertainty in the detected and/or estimated position of the mobile device 2). Advantageously, the mobile device 2 is allowed to operate in the region of this plurality whose tolerance threshold is immediately greater than the uncertainty in the detected and/or estimated position of the mobile device 2.

The operating method according to the present example advantageously provides that, once the region of the working area 1 wherein the mobile device 2 is allowed to operate has been determined, the movement of the mobile device in this region of the working area 1 takes place by considering the scheduling of the mobile device 2 (for example, with special reference to the working area shown in Figure 6, a scheduling can include the maintenance of the portion of the working area on the left of the driveway 49 on a first day and the maintenance of the portion of the work area on the right of the driveway 49 on a second day) and optimization criteria, aimed at minimizing the distance traveled by the mobile device 2 and consequently reducing the consumption of resources (in particular electricity or electricity fuel) by the mobile device 2.

According to the operating method described, the detection and/or estimate of the position of the mobile device 2 in the working area 1 and of the uncertainty in the position of the mobile device 2 take place on a regular basis. In particular, it can be provided that the detection and/or the estimate of the position of the mobile device 2 in the working area 1 and of the uncertainty in the position of the mobile device 2 are carried out with a predetermined frequency, whose determination can depend on the advancement speed of the mobile device (for example, a detection and/or estimate per tenth of a second or a detection and/or estimate per second).

Advantageously, if at least one sensor device is provided (for example a spectrum sensor or a capacitive sensor) which cooperates with the position detector 5 in order to assist the movement of the mobile device 2 in the working area 1, it is constantly detected if the land below the mobile device 2 or near the mobile device 2 is covered with grass. Since typically only the working area 1 is covered with grass, such sensor device is suitable for detecting whether the mobile device 2 is outside the contour 10 or near the contour 10 and therefore can effectively contribute to maintain the device mobile 2 inside the working area 1. If the mobile device 2 is near the contour 10 (and even more when the mobile device 2 has already passed the contour 10) specific maneuvers of the mobile device 2 can be provided, for example by contemplating reductions in the advancement speed or deviations in the direction of advancement.

Advantageously, the mobile device 2, when in motion, having appropriate sensor devices, can acquire information about the working area 1 or detect parameters regarding the working area 1. Such information and/or parameters are suitably associated to the respective positions of the mobile device 2 in the working area 1, so that representations can be generated (which can also be viewed on remote devices) for example of the state of health of the lawn and/or of the soil moisture and/or the height of the grass. In particular, providing the mobile device 2 with a spectrum sensor, it is possible to calculate the NDVI ("Normalized Difference Vegetation Index") in correspondence of each detected position of the mobile device 2 and produce a specific representation. The operating method according to the present invention can also provide for a security measure such that, if the uncertainty in the position of the mobile device 2 happens to be greater than both the tolerance threshold of the region where the mobile device 2 has been identified and the tolerance threshold of any region of the working area 1, the mobile device 2 is stopped. The operating method in this circumstance may also provide for the arrest of the payload (for example the rotating blade) of the mobile device 2. In a possible simplified alternative, this safety measure can provide that the mobile device 2 can be stopped if the uncertainty in the position of the mobile device 2 is greater than both the tolerance threshold of the region where the mobile device 2 has been detected and the tolerance threshold of the region immediately next at the interior. For example, if the mobile device 2 has been detected to be located in the first region 11, the arrest of the mobile device 2 occurs if the uncertainty in the position of the mobile device 2 is greater than both the first tolerance threshold and the second tolerance threshold. The arrest of the mobile device 2 is therefore determined until the uncertainty of its position becomes adequate, in particular minor than the tolerance threshold of the region where the mobile device 2 is positioned or the tolerance threshold of the internal region immediately adjacent or of the tolerance threshold of at least any region of the working area 1.

The operating method according to the present example, if the mobile device 2 has been detected to be located within the area of influence 41 defined by the reference point 30, also advantageously provides for the determination of the position of the mobile device 2 with respect to the reference point 30. For this purpose, the reference point 30 and the mobile device 2 can comprise one or more sensors, for example a beacon, configured to estimate their mutual distance. In this way, the navigation of the mobile device 2 is performed by these sensors in order to allow the mobile device 2 to approach the reference point 30, useful for example when the mobile device 2 approaches or connects to the charging dock when the latter coincides with the reference point. The position of the mobile device 2, when the latter is located within the area of influence 41, can be obtained both from information deriving from the satellite position device, and from the information obtained from the beacon sensor of the reference point 30, this redundancy allowing to reduce the uncertainty in estimating the position of the mobile device 2 and therefore an optimal connection between the charging dock and the mobile device 2.

### ADVANTAGES OF THE INVENTION

The present invention provides an installation method of a mobile device for mapping a working area wherein the mobile device is configured to operate. Thanks to the present invention, laying perimeter wire is no longer required and all the potentials made possible by the most advanced position detection systems are employed adequately.

In particular, the invention based on the recognition of the human figure overcomes all the above mentioned drawbacks relating to the technical solution disclosed by document US2019/0163174A1. In fact, the recognition of the human figure through an optical detection system on board the mobile device allows to have maximum flexibility in the installation of the mobile device, to guarantee the operator an optimal comfort of use and to better detect, during the mapping step, changes in orientation due to changes of direction of the operator, with a consequent improved definition of the contour of the working area of the mobile device.

The advantages of the present invention are intended to be achieved by an installation method in accordance with one or more of the appended claims and by each possible variant of such method which maintains its inventive characteristics.

## Claims

1. Method of installation of a mobile device (2) for the maintenance of land, in particular lawns or gardens or agricultural land, even more particularly a mobile device (2) for mowing grass, said installation method comprising a mapping step of a working area (1) for said mobile device (2), the mapping step of said working area (1) comprising a definition step of at least one contour (10) at least partially delimiting said working area (1), said definition step of said at least one contour (10) comprising the steps of:
i) following an operator (50) by using said mobile device (2) while said operator (50) moves along a predetermined trajectory;
ii) recording the path followed by said mobile device (2) during the following step to determine said contour (10), said contour substantially comprising the positions occupied by said mobile device (2) along said path,
wherein said following step is carried out by means of an optical detection system (3),
**characterized in that** said installation method is based on the recognition of the shape and/or the physiognomy of said operator (50).

2. Installation method according to claim 1, wherein said optical detection system comprises at least a camera or a 3D radar sensor integral with said mobile device (2).

3. Installation method according to claim 1 or claim 2, wherein said following step is based on recognition of the shape and/or the physiognomy of said operator (50).

4. Installation method according to any one of the preceding claims, further comprising a definition step of a profile connected to said operator (50), in such a definition step peculiar traits and/or peculiar features of the physiognomy of said operator (50) being acquired, by means of said optical detection system (3), preferably taking into consideration images of said operator (50) captured according to different orientations.

5. Installation method according to the preceding claim, wherein said peculiar traits and/or said peculiar features of the physiognomy of said operator (50) are integrated with parameters regarding the physiognomy of said operator (50) manually entered by said operator (50) and/or obtained by means of an estimator of said mobile device (2).

6. Installation method according to claim 4 or claim 5, wherein said definition step of a profile includes a step of setting an optimal distance between said operator (50) and said mobile device (2) and/or a step of setting an optimal advancement speed of said operator (50), said optimal distance between said operator (50) and said mobile device (2) being in particular calculated as a function of a dimension of said operator (50), preferably as a function of a height of said operator (50), said optimal advancement speed of said operator (50) being in particular calculated as a function of an optimal advancement speed of said mobile device (2).

7. Installation method according to any one of the preceding claims, further comprising a step of recognition of a profile connected to said operator (50), said recognition step comprising the substeps of:
- acquiring, by means of said optical detection system (3), peculiar traits and/or peculiar features regarding the physiognomy of an operator,
- obtaining an operator profile starting from said peculiar traits and/or said peculiar features and
- comparing said operator profile with one or more operator profiles stored in memory.

8. Installation method according to any one of the preceding claims, wherein a control of the distance between said operator (50) and said mobile device (2) by means of a time-of-flight detection system (4), in particular by means of a time-of-flight detection system (4) comprising at least one transceiver (4a) integral with said mobile device (2), is available in said following step in order to perform a validation of the distance between said operator (50) and said mobile device (2) detected by said optical detection system (3).

9. Installation method according to any one of the preceding claims, further comprising a validation step of said contour (10) and/or of a reference path within said working area (1), said validation step comprising:
- a step for checking the consistency of said contour (10) and/or of said reference path, in particular aimed at ascertaining that the positions included in said contour (10) define a closed contour and/or that the positions included in said reference path lead to an objective position and/or
- a reproduction step of said contour (10), in particular aimed at driving said mobile device (2) so as to autonomously travel said contour (10) and/or said reference path and consequently to provide evidence that said contour (10) and/or said reference path has been correctly received by said mobile device (2) and/or
- a displaying step of said contour and/or of said reference path, in particular aimed at showing a virtual representation of said contour and/or of said reference path on an interface of a remote device.

10. Installation method according to any one of the preceding claims, said contour (10) externally or internally delimiting said working area (1), further comprising a step of association of at least one information to at least one stretch (10a, 10b) of said contour, said information being related to:
- a description of said stretch, specifically explanatory of the typology of said stretch, and/or
- an identification of at least one element adjacent to said working area in correspondence of said stretch and/or
- an index representative of the criticality of said stretch, in particular related to the danger of a possible deviation from said working area, in correspondence of said stretch, by said mobile device, and/or
- an extension, in correspondence of said stretch, of a region of said working area extending from said contour and/or
- a tolerance threshold of an estimated uncertainty of the detected position of said mobile device applicable in proximity of said stretch.

11. Installation method according to the preceding claim, said at least one information being uniquely coded by means of a predetermined signal, wherein said association step is preceded by a detection step of said predetermined signal and by a decoding step of said predetermined signal, said predetermined signal being:
- a gesture and/or
- a vocal command and/or
- a selection made by means of a remote device (100), in particular by typing on an interface of said remote device (100) and/or
- a characterization, in particular a chromatic characterization, of a graphic element displayed on an interface (101) of a remote device (100) and representative of said stretch (10a, 10b).

12. Installation method according to any one of the preceding claims, further comprising a step of setting a reference distance between said mobile device (2) and said operator (50), wherein the value of said reference distance is:
- a predetermined distance value and/or
- a distance value calculated on the basis of at least one characteristic of said mobile device (2) and/or of said operator, in particular said at least one characteristic being a dimension, for example a height and/or
- a distance value between said mobile device (2) and said operator (2) detected before following step.

13. Installation method according to any one of the preceding claims, wherein said following step comprises a step of monitoring the distance between said mobile device (2) and said operator (50) and a step of piloting said mobile device (2) on the basis of a comparison between said reference distance and the distance between said mobile device (2) and said operator (50) detected in said monitoring step, said piloting step implying:
- a check on the advancement of said mobile device (2) and/or
- a check on the speed of said mobile device (2) and/or
- a check on the acceleration of said mobile device (2) and/or
- a check on the orientation of said mobile device (2).

14. Installation method according to any one of the preceding claims, wherein said definition step of said at least one contour and/or of said reference path comprises the step of providing a plurality of intermediate points along said contour (10) and/or along said reference path, said intermediate points being configured to act as restoration points of the definition step of said at least one contour and/or of said reference path after an event that has previously caused an interruption of said definition step of said at least one contour and/or of said reference path, such as for example a detection of an obstacle or a detection of unsuitable land or an access into a shaded area of a position signal, and wherein for the detection of said intermediate points a first criterion and/or a second criterion and/or a third criterion is adopted, said first criterion being a criterion of substantial coincidence in the distance between consecutive intermediate points, said second criterion being a criterion of substantial coincidence in the travel time between consecutive intermediate points, said third criterion being a criterion of substantial coincidence between the position of said intermediate points and the position of significant points of said contour (10) and/or of said reference path.

15. Installation method according to any one of the preceding claims, wherein said definition step of said at least one contour and/or of said reference path comprises the step of checking for the presence of any obstacles to the advancement of said mobile device (2) and/or of any unsuitable land for the advancement of said mobile device (2).

## Patentansprüche

1. Verfahren zur Installation einer mobilen Vorrichtung (2) zur Pflege von Flächen, insbesondere Rasenflächen oder Gärten oder landwirtschaftlich genutzten Flächen, noch spezieller einer mobilen Vorrichtung (2) zum Mähen von Gras, wobei das Installationsverfahren einen Schritt des Kartierens eines Arbeitsbereichs (1) für die mobile Vorrichtung (2) umfasst, wobei der Schritt des Kartierens des Arbeitsbereichs (1) einen Schritt des Festlegens von mindestens einer Außenlinie (10) umfasst, die den Arbeitsbereich (1) zumindest teilweise begrenzt, wobei der Schritt des Festlegens der mindestens einen Außenlinie (10) die folgenden Schritte umfasst:
i) Verfolgen eines Bedieners (50) unter Verwendung der mobilen Vorrichtung (2), während sich der Bediener (50) entlang einer vorbestimmten Bewegungsbahn bewegt;
ii) Aufzeichnen des Pfads, den die mobile Vorrichtung (2) während des Schritts des Verfolgens verfolgt, um die Außenlinie (10) zu bestimmen, wobei die Außenlinie im Wesentlichen die Positionen umfasst, die von der mobilen Vorrichtung (2) entlang des Pfads eingenommen werden,
wobei der Schritt des Verfolgens mittels eines optischen Erfassungssystems (3) durchgeführt wird,
**dadurch gekennzeichnet, dass** das Installationsverfahren auf der Erkennung der Gestalt und/oder der Physiognomie des Bedieners (50) basiert.

2. Installationsverfahren nach Anspruch 1, wobei das optische Erfassungssystem mindestens eine Kamera oder einen 3D-Radarsensor umfasst, die in der mobilen Vorrichtung (2) integriert sind.

3. Installationsverfahren nach Anspruch 1 oder Anspruch 2, wobei der Schritt des Verfolgens auf einer Erkennung der Gestalt und/oder der Physiognomie des Bedieners (50) basiert.

4. Installationsverfahren nach einem beliebigen der vorhergehenden Ansprüche, das ferner einen Schritt des Festlegens eines Profils umfasst, das mit dem Bediener (50) verbunden ist, wobei in einem solchen Schritt des Festlegens besondere Eigenschaften und/oder besondere Merkmale der Physiognomie des Bedieners (50) mittels des optischen Erfassungssystems (3) erfasst werden, wobei vorzugsweise Bilder des Bedieners (50) berücksichtigt werden, die gemäß unterschiedlichen Ausrichtungen aufgenommen wurden.

5. Installationsverfahren nach dem vorhergehenden Anspruch, wobei die besonderen Eigenschaften und/oder die besonderen Merkmale der Physiognomie des Bedieners (50) mit Parametern hinsichtlich der Physiognomie des Bedieners (50) kombiniert werden, die von dem Bediener (50) manuell eingegeben werden und/oder mittels einer Schätzfunktion der mobilen Vorrichtung (2) erhalten werden.

6. Installationsverfahren nach Anspruch 4 oder Anspruch 5, wobei der Schritt des Festlegens eines Profils einen Schritt des Einstellens eines optimalen Abstands zwischen dem Bediener (50) und der mobilen Vorrichtung (2) und/oder einen Schritt des Einstellens einer optimalen Fortbewegungsgeschwindigkeit des Bedieners (50) umfasst, wobei der optimale Abstand zwischen dem Bediener (50) und der mobilen Vorrichtung (2) insbesondere in Abhängigkeit von einer Größe des Bedieners (50), vorzugsweise in Abhängigkeit von einer Höhe des Bedieners (50) berechnet wird, wobei die optimale Fortbewegungsgeschwindigkeit des Bedieners (50) insbesondere in Abhängigkeit von einer optimalen Fortbewegungsgeschwindigkeit der mobilen Vorrichtung (2) berechnet wird.

7. Installationsverfahren nach einem beliebigen der vorhergehenden Ansprüche, das ferner einen Schritt des Erkennens eines Profils umfasst, das mit dem Bediener (50) verbunden ist, wobei der Schritt des Erkennens die folgenden Teilschritte umfasst:
- Erfassen, mittels des optischen Erfassungssystems (3), besonderer Eigenschaften und/oder besonderer Merkmale hinsichtlich der Physiognomie eines Bedieners,
- Erhalten eines Bedienerprofils beginnend mit den besonderen Eigenschaften und/oder den besonderen Merkmalen, und
- Vergleichen des Bedienerprofils mit einem oder mehreren Bedienerprofilen, die in einem Speicher gespeichert sind.

8. Installationsverfahren nach einem beliebigen der vorhergehenden Ansprüche, wobei eine Steuerung bzw. Regelung des Abstands zwischen dem Bediener (50) und der mobilen Vorrichtung (2) mittels eines Laufzeiterfassungssystems (4), insbesondere mittels eines Laufzeiterfassungssystems (4), das mindestens einen Sendeempfänger (4a) umfasst, der in der mobilen Vorrichtung (2) integriert ist, in dem Schritt des Verfolgens verfügbar ist, um eine Validierung des Abstands zwischen dem Bediener (50) und der mobilen Vorrichtung (2), der von dem optischen Erfassungssystem (3) erfasst wird, auszuführen.

9. Installationsverfahren nach einem beliebigen der vorhergehenden Ansprüche, das ferner einen Schritt des Validierens der Außenlinie (10) und/oder eines Referenzpfads innerhalb des Arbeitsbereichs (1) umfasst, wobei der Schritt des Validierens Folgendes umfasst:
- einen Schritt zum Überprüfen der Konsistenz der Außenlinie (10) und/oder des Referenzpfads, der insbesondere darauf abzielt, sicherzustellen, dass die Positionen, die in der Außenlinie (10) umfasst sind, eine geschlossene Außenlinie definieren, und/oder dass die Positionen, die in dem Referenzpfad umfasst sind, zu einer Zielposition führen, und/oder
- einen Schritt des Reproduzierens der Außenlinie (10), der insbesondere darauf abzielt, die mobile Vorrichtung (2) so anzutreiben, dass sie die Außenlinie (10) und/oder den Referenzpfad autonom abfährt und infolgedessen nachweist, dass die Außenlinie (10) und/oder der Referenzpfad von der mobilen Vorrichtung (2) korrekt empfangen wurde, und/oder
- einen Schritt des Anzeigens der Außenlinie und/oder des Referenzpfads, der insbesondere darauf abzielt, eine virtuelle Darstellung der Außenlinie und/oder des Referenzpfads auf einer Schnittstelle einer entfernten Vorrichtung zu anzuzeigen.

10. Installationsverfahren nach einem beliebigen der vorhergehenden Ansprüche, wobei die Außenlinie (10) den Arbeitsbereich (1) nach außen oder nach innen begrenzt, das ferner einen Schritt des Zuordnens von mindestens einer Information zu mindestens einer Strecke (10a, 10b) der Außenlinie umfasst, wobei die Information im Zusammenhang steht mit:
- einer Beschreibung der Strecke, die besonders die Typologie der Strecke verdeutlicht, und/oder
- einer Kennzeichnung mindestens eines Elements, das in Übereinstimmung mit der Strecke benachbart zu dem Arbeitsbereich ist, und/oder
- einem Index, der die Bedeutung der Strecke darstellt, insbesondere im Zusammenhang mit der Gefahr eines möglichen Abweichens von dem Arbeitsbereich in Übereinstimmung mit der Strecke durch die mobile Vorrichtung, und/oder
- einer Erweiterung, in Übereinstimmung mit der Strecke, einer Fläche des Arbeitsbereichs, die sich von der Außenlinie erstreckt, und/oder
- einer Toleranzschwelle einer geschätzten Ungenauigkeit der erfassten Position der mobilen Vorrichtung, die in der Nähe der Strecke anwendbar ist.

11. Installationsverfahren nach dem vorhergehenden Anspruch, wobei die mindestens eine Information mittels eines vorbestimmten Signals eindeutig verschlüsselt wird, wobei dem Schritt des Zuordnens ein Schritt des Erfassens des vorbestimmten Signals und ein Schritt des Entschlüsselns des vorbestimmten Signals vorausgehen, wobei das vorbestimmte Signal Folgendes ist:
- eine Geste, und/oder
- ein Sprachbefehl, und/oder
- eine Auswahl, die mittels einer entfernten Vorrichtung (100) getroffen wird, insbesondere durch Tippen auf einer Schnittstelle der entfernten Vorrichtung (100), und/oder
- eine Charakterisierung, insbesondere eine chromatische Charakterisierung, eines Grafikelements, das auf einer Schnittstelle (101) einer entfernten Vorrichtung (100) angezeigt wird und die Strecke (10a, 10b) darstellt.

12. Installationsverfahren nach einem beliebigen der vorhergehenden Ansprüche, das ferner einen Schritt des Einstellens eines Referenzabstands zwischen der mobilen Vorrichtung (2) und dem Bediener (50) umfasst, wobei der Wert des Referenzabstands Folgendes ist:
- ein vorbestimmter Abstandswert, und/oder
- ein Abstandswert, der auf der Grundlage von mindestens einer Charakteristik der mobilen Vorrichtung (2) und/oder des Bedieners berechnet wird, wobei die mindestens eine Charakteristik insbesondere eine Größe, beispielsweise eine Höhe, ist, und/oder
- ein Abstandswert zwischen der mobilen Vorrichtung (2) und dem Bediener (50), der vor dem Schritt des Verfolgens erfasst wird.

13. Installationsverfahren nach einem beliebigen der vorhergehenden Ansprüche, wobei der Schritt des Verfolgens einen Schritt des Überwachens des Abstands zwischen der mobilen Vorrichtung (2) und dem Bediener (50) und einen Schritt des Navigierens der mobilen Vorrichtung (2) auf der Grundlage eines Vergleichs von dem Referenzabstand mit dem Abstand zwischen der mobilen Vorrichtung (2) und dem Bediener (50), der in dem Schritt des Überwachens erfasst wird, umfasst, wobei der Schritt des Navigierens Folgendes einbezieht:
- eine Überprüfung der Fortbewegung der mobilen Vorrichtung (2), und/oder
- eine Überprüfung der Geschwindigkeit der mobilen Vorrichtung (2), und/oder
- eine Überprüfung der Beschleunigung der mobilen Vorrichtung (2), und/oder
- eine Überprüfung der Ausrichtung der mobilen Vorrichtung (2).

14. Installationsverfahren nach einem beliebigen der vorhergehenden Ansprüche, wobei der Schritt des Festlegens der mindestens einen Außenlinie und/oder des Referenzpfads den Schritt des Vorsehens einer Vielzahl von Zwischenpunkten entlang der Außenlinie (10) und/oder entlang des Referenzpfads umfasst, wobei die Zwischenpunkte so ausgestaltet sind, dass sie als Wiederherstellungspunkte des Schritts des Festlegens der mindestens einen Außenlinie und/oder des Referenzpfads nach einem Ereignis fungieren, das zuvor eine Unterbrechung des Schritts des Festlegens der mindestens einen Außenlinie und/oder des Referenzpfads verursacht hat, wie beispielsweise eine Erfassung eines Hindernisses oder eine Erfassung von ungeeigneten Flächen oder ein Eintreten in einen von einem Positionssignal abgeschatteten Bereich, und wobei für die Erfassung der Zwischenpunkte ein erstes Kriterium und/oder ein zweites Kriterium und/oder ein drittes Kriterium angewendet wird, wobei das erste Kriterium ein Kriterium einer wesentlichen Übereinstimmung hinsichtlich des Abstands zwischen aufeinanderfolgenden Zwischenpunkten ist, wobei das zweite Kriterium ein Kriterium einer wesentlichen Übereinstimmung hinsichtlich der Fahrzeit zwischen aufeinanderfolgenden Zwischenpunkten ist, wobei das dritte Kriterium ein Kriterium einer wesentlichen Übereinstimmung zwischen den Positionen der Zwischenpunkte und der Position von bedeutenden Punkten der Außenlinie (10) und/oder des Referenzpfads ist.

15. Installationsverfahren nach einem beliebigen der vorhergehenden Ansprüche, wobei der Schritt des Festlegens der mindestens einen Außenlinie und/oder des Referenzpfads den Schritt des Überprüfens auf das Vorhandensein von etwaigen Hindernissen für die Fortbewegung der mobilen Vorrichtung (2) und/oder von etwaigen für die Fortbewegung der mobilen Vorrichtung (2) ungeeigneten Flächen umfasst.

## Revendications

1. Procédé d'installation d'un dispositif mobile (2) pour l'entretien de terres, en particulier de gazons ou de jardins ou de terre agricole, même plus particulièrement d'un dispositif mobile (2) pour tondre l'herbe, ledit procédé d'installation comprenant une étape de cartographie d'une zone de travail (1) pour ledit dispositif mobile (2), l'étape de cartographie de ladite zone de travail (1) comprenant une étape de définition d'au moins un contour (10) délimitant au moins partiellement ladite zone de travail (1), ladite étape de définition dudit au moins un contour (10) comprenant les étapes de :
i) suivi d'un opérateur (50) en utilisant ledit dispositif mobile (2) tandis ledit opérateur (50) se déplace le long d'une trajectoire prédéterminée ;
ii) enregistrement du trajet suivi par ledit dispositif mobile (2) durant l'étape suivante pour déterminer ledit contour (10), ledit contour comprenant sensiblement les positions occupées par ledit dispositif mobile (2) le long dudit trajet,
ladite étape suivante étant conduite à l'aide d'un système de détection optique (3),
**caractérisé en ce que** ledit procédé d'installation est basé sur la reconnaissance de la forme et/ou de la physionomie dudit opérateur (50).

2. Procédé d'installation selon la revendication 1, ledit système de détection optique comprenant au moins une caméra ou un capteur radar 3D solidaire dudit dispositif mobile (2).

3. Procédé d'installation selon la revendication 1 ou la revendication 2, ladite étape suivante étant basée sur la reconnaissance de la forme et/ou de la physionomie dudit opérateur (50).

4. Procédé d'installation selon l'une quelconque des revendications précédentes, comprenant en outre une étape de définition d'un profil connecté audit opérateur (50), dans une telle étape de définition, des traits particuliers et/ou des caractéristiques particulières de la physionomie dudit opérateur (50) étant acquis, à l'aide dudit système de détection optique (3), en prenant préférablement en considération les images dudit opérateur (50) capturées en fonction de différentes orientations.

5. Procédé d'installation selon la revendication précédente, lesdits traits particuliers et/ou lesdites caractéristiques particulières de la physionomie dudit opérateur (50) étant intégrés aux paramètres concernant la physionomie dudit opérateur (50) saisis manuellement par ledit opérateur (50) et/ou obtenus à l'aide d'un dispositif d'estimation dudit dispositif mobile (2).

6. Procédé d'installation selon la revendication 4 ou la revendication 5, ladite étape de définition d'un profil comprenant une étape de paramétrage d'une distance optimale entre ledit opérateur (50) et ledit dispositif mobile (2) et/ou une étape de paramétrage d'une vitesse de progression optimale dudit opérateur (50), ladite distance optimale entre ledit opérateur (50) et ledit dispositif mobile (2) étant en particulier calculée comme une fonction d'une dimension dudit opérateur (50), préférablement comme une fonction d'une hauteur dudit opérateur (50), ladite vitesse de progression optimale dudit opérateur (50) étant en particulier calculée comme une fonction d'une vitesse de progression optimale dudit dispositif mobile (2).

7. Procédé d'installation selon l'une quelconque des revendications précédentes, comprenant en outre une étape de reconnaissance d'un profil relié audit opérateur (50), ladite étape de reconnaissance comprenant les sous-étapes de :
- acquisition, à l'aide dudit système de détection optique (3), de traits particuliers et/ou de caractéristiques particulières concernant la physionomie d'un opérateur,
- obtention d'un profil d'opérateur commençant à partir desdits traits particuliers et/ou desdites caractéristiques particulières et
- comparaison dudit profil d'opérateur à un ou plusieurs profils d'opérateur stockés en mémoire.

8. Procédé d'installation selon l'une quelconque des revendications précédentes, une régulation de la distance entre ledit opérateur (50) et ledit dispositif mobile (2) à l'aide d'un système de détection à temps de vol (4), en particulier à l'aide d'un système de détection à temps de vol (4) comprenant au moins un émetteur-récepteur (4a) solidaire dudit dispositif mobile (2), étant disponible dans ladite étape suivante afin d'effectuer une validation de la distance entre ledit opérateur (50) et ledit dispositif mobile (2) détectée par ledit système de détection optique (3).

9. Procédé d'installation selon l'une quelconque des revendications précédentes, comprenant en outre une étape de validation dudit contour (10) et/ou un trajet de référence à l'intérieur de ladite zone de travail (1), ladite étape de validation comprenant :
- une étape de vérification de la cohérence dudit contour (10) et/ou dudit trajet de référence, en particulier visant à s'assurer que les positions comprises dans ledit contour (10) définissent un contour fermé et/ou que les positions comprises dans ledit trajet de référence conduisent à une position objective et/ou
- une étape de reproduction dudit contour (10), en particulier visant à amener ledit dispositif mobile (2) à se déplacer de manière autonome le long dudit contour (10) et/ou dudit trajet de référence et par conséquent pour fournir la preuve que ledit contour (10) et/ou ledit trajet de référence ont été correctement reçus par ledit dispositif mobile (2) et/ou
- une étape d'affichage dudit contour et/ou dudit trajet de référence, en particulier visant à montrer une représentation virtuelle dudit contour et/ou dudit trajet de référence sur une interface d'un dispositif distant.

10. Procédé d'installation selon l'une quelconque des revendications précédentes, ledit contour (10) délimitant au plan externe ou interne ladite zone de travail (1), comprenant en outre une étape d'association d'au moins une information d'au moins une étendue (10a, 10b) dudit contour, lesdites informations étant liées à :
- une description de ladite étendue, spécifiquement explicative de la typologie de ladite étendue, et/ou
- une identification d'au moins un élément adjacent à ladite zone de travail en correspondance de ladite étendue et/ou
- un indice représentatif du degré de difficulté de ladite étendue, en particulier lié au danger d'un écart possible depuis ladite zone de travail, en correspondance de ladite étendue, par ledit dispositif mobile, et/ou
- une extension, en correspondance de ladite étendue, d'une région de ladite zone de travail s'étendant depuis ledit contour et/ou
- un seuil de tolérance d'une incertitude estimée de la position détectée dudit dispositif mobile applicable à proximité de ladite étendue.

11. Procédé d'installation selon la revendication précédente, les au moins dites informations étant uniquement codées à l'aide d'un signal prédéterminé, ladite étape d'association étant précédée d'une étape de détection dudit signal prédéterminé et d'une étape de décodage dudit signal prédéterminé, ledit signal prédéterminé étant :
- un geste et/ou
- une commande vocale et/ou
- une sélection effectuée à l'aide d'un dispositif distant (100), en particulier par saisie sur une interface dudit dispositif distant (100) et/ou
- une caractérisation, en particulier une caractérisation chromatique, d'un élément graphique affiché sur une interface (101) d'un dispositif distant (100) et représentatif de ladite étendue (10a, 10b).

12. Procédé d'installation selon l'une quelconque des revendications précédentes, comprenant en outre une étape de paramétrage d'une distance de référence entre ledit dispositif mobile (2) et ledit opérateur (50), la valeur de ladite distance de référence étant :
- une valeur de distance prédéterminée et/ou
- une valeur de distance calculée sur la base d'au moins une caractéristique dudit dispositif mobile (2) et/ou ledit opérateur, en particulier ladite au moins une caractéristique étant une dimension, par exemple une hauteur et/ou
- une valeur de distance entre ledit dispositif mobile (2) et ledit opérateur (2) détectée avant l'étape suivante.

13. Procédé d'installation selon l'une quelconque des revendications précédentes, ladite étape suivante comprenant une étape de suivi de la distance entre ledit dispositif mobile (2) et ledit opérateur (50) et une étape de pilotage dudit dispositif mobile (2) sur la base d'une comparaison entre ladite distance de référence et la distance entre ledit dispositif mobile (2) et ledit opérateur (50) détectée dans ladite étape de suivi, ladite étape de pilotage impliquant :
- un contrôle de la progression dudit dispositif mobile (2) et/ou
- un contrôle de la vitesse dudit dispositif mobile (2) et/ou
- un contrôle de l'accélération dudit dispositif mobile (2) et/ou
- un contrôle de l'orientation dudit dispositif mobile (2).

14. Procédé d'installation selon l'une quelconque des revendications précédentes, ladite étape de définition dudit au moins un contour et/ou dudit trajet de référence comprenant l'étape de fourniture d'une pluralité de points intermédiaires le long dudit contour (10) et/ou le long dudit trajet de référence, lesdits points intermédiaires étant conçus afin d'agir comme points de restauration de l'étape de définition dudit au moins un contour et/ou dudit trajet de référence après un événement qui a précédemment causé une interruption de ladite étape de définition dudit au moins un contour et/ou dudit trajet de référence, de sorte par exemple qu'une détection d'un obstacle ou qu'une détection d'une terre ne convenant pas ou d'un accès dans une zone ombrée d'un signal de position, et pour la détection desdits points intermédiaires d'un premier critère et/ou d'un second critère et/ou d'un troisième critère étant adoptés, ledit premier critère étant un critère de coïncidence substantielle dans la distance entre les points intermédiaires consécutifs, ledit second critère étant un critère de coïncidence substantielle dans le temps de déplacement entre des points intermédiaires consécutifs, ledit troisième critère étant un critère de coïncidence substantielle entre la position desdits points intermédiaires et la position des points significatifs dudit contour (10) et/ou dudit trajet de référence.

15. Procédé d'installation selon l'une quelconque des revendications précédentes, ladite étape de définition dudit au moins un contour et/ou dudit trajet de référence comprenant l'étape de vérification de la présence de tous obstacles à la progression dudit dispositif mobile (2) et/ou de toutes terres ne convenant pas à la progression dudit dispositif mobile (2).
